# EUROPÄISCHE PATENTSCHRIFT

(11) **EP 1 562 772 B1**
(45) Veröffentlichungstag und Bekanntmachung des Hinweises auf die Patenterteilung: **17.09.2008**
(21) Anmeldenummer: 03767586.5
(22) Anmeldetag: 20.11.2003
(51) Int. Cl.: B60K 31/00

(54) **SYSTEM ZUR BEEINFLUSSUNG DER GESCHWINDIGKEIT EINES KRAFTFAHRZEUGES**
SYSTEM FOR INFLUENCING THE SPEED OF A MOTOR VEHICLE
SYSTEME POUR INFLUER SUR LA VITESSE D'UN VEHICULE AUTOMOBILE

(30) Priorität: 21.11.2002 DE 10254398
(43) Veröffentlichungstag der Anmeldung: 17.08.2005
(73) Patentinhaber: Lucas Automotive GmbH, 56070 Koblenz (DE)
(72) Erfinder: HEINRICHS-BARTSCHER, Sascha, 56075 Koblenz (DE)
(74) Vertreter: Schmidt, Steffen J.
(86) Internationale Anmeldenummer: PCT/EP2003/013037
(87) Internationale Veröffentlichungsnummer: WO 2004/045892

(56) Entgegenhaltungen:
- DE-A- 19 637 245
- DE-A- 19 757 063

## Beschreibung

### Hintergrund der Erfindung

Die Erfindung betrifft ein System zur Beeinflussung der Geschwindigkeit eines Kraftfahrzeuges (KFZs). Derartige Steuerungen werden unter der Bezeichnung ACC (Autonomous/ Adaptive - Cruise Control) vermehrt in KFZen, insbesondere PKW der Oberklasse und oberen Mittelklasse eingesetzt.

### Stand der Technik

Es sind Einrichtungen bekannt, welche die Fahrtgeschwindigkeit eines KFZs regeln, wobei der Fahrer eine Wunschgeschwindigkeit vorgeben kann und durch einen Geschwindigkeitsregler die Fahrtgeschwindigkeit des KFZs auf diese Zielgeschwindigkeit gebracht und dort gehalten wird, solange diese Einrichtung aktiviert ist. Allerdings findet hierbei keine Überwachung der Fahrtgeschwindigkeit eines vorausfahrenden KFZs statt. Daher muss der Fahrer eingreifen wenn sich sein eigenes KFZ dem vorausfahrenden KFZ zu sehr nähert. Gleichermaßen kann der Fahrer aber auch bei einer Erhöhung der Geschwindigkeit des vorausfahrenden KFZs die Geschwindigkeit seines eigenen KFZs entsprechend erhöhen. Eine Einrichtung die dem Fahrer die Überwachung des Abstandes zum vorausfahrenden KFZ abnimmt und die Geschwindigkeit seines eigenen KFZs an die Geschwindigkeit eines vorausfahrenden KFZs anpasst, ist zum Beispiel in der EP-A-0 612 641 beschrieben. Ein gattungsgemäßes System ist aus DE 197 57 063 A1 bekannt.

### Der Erfindung zugrunde liegendes Problem

Um derartige ACC-Systeme mit Erfolg einem breiteren Einsatz zuzuführen, ist ein sicherer und zuverlässigerer Betrieb dieser Systeme erforderlich, der auch in höherem Fahrkomfort und damit einer gesteigerten Akzeptanz bei den Fahrern resultiert. Insbesondere befasst sich die Erfindung mit dem Problem, eine durch Spiegeleffekte von Radarstrahlen an Hindernissen, zum Beispiel Leitplanken oder dergl. hervorgerufene Fehlauswahl des Ziel-KFZs zu vermeiden.

### Erfindungsgemäße Lösung

Das erfindungsgemäße System hält in der elektronischen Steuereinheit eine Zielliste vor, in der für jedes Objekt ein Wert vorgehalten und regelmäßig aktualisiert wird, der die Rauschamplitude des Peilwinkels zu jedem der Objekte wiedergibt, die sich im Raum vor dem eigenen KFZ befinden. Vorzugsweise wird für alle Objekte in der elektronischen Steuereinheit der zeitliche Verlauf dieses Wertes mittels eines Tiefpasses geglättet. Wenn der geglättete Wert-Verlauf für ein Objekt einen entfernungsabhängigen Schwellenwert überschreitet, wird dieses Objekt von der Auswahl als Ziel-KFZ ausgeschlossen. Dabei geht die Erfindung von der Erkenntnis aus, dass eine intensivere Auswertung der Fahrumgebung des eigenen KFZs erforderlich ist. Die Ergebnisse dieser Auswertung der Fahrumgebung sind dann bei der Beeinflussung der Geschwindigkeit des eigenen KFZs mit heranzuziehen. Damit verbessert sich die Zuverlässigkeit und die Gesamtleistungsfähigkeit des erfindungsgemäßen Systems erheblich.

### Erfindungsgemäße Ausgestaltungen und vorteilhafte Weiterbildungen

Die Funktion eines ACC-System der erfindungsgemäßen Art beruht darauf, dass an der Frontpartie des eigenen KFZs ein in der Regel starr nach vorne orientierter Sensor, meist ein Radarsensor, mit einem relativ schmalen Erfassungsbereich angeordnet ist. Dieser Sensor dient dazu, in dem Erfassungsbereich befindliche Objekte zu detektieren und an eine elektronische Steuereinheit (mit Abstand und Seitenablage oder Winkellage zur Mittelachse des Sensors bzw. des KFZes, sowie ggf. die Größe des Objektes) zu melden. Aus diesen Daten sowie aus einigen anderen, im eigenen KFZ gewonnenen Daten (Geschwindigkeit, Dreh- oder Gierrate um die Hochachse des eigenen KFZes, Querbeschleunigung des eigenen KFZs etc.) wird dann in der elektronischen Steuereinheit zunächst die Fahrspur oder der Fahrkorridor des eigenen KFZs ermittelt. Basierend hierauf wird dann nach bestimmten Kriterien ein, in der Regel das nächstliegende KFZ im eigenen Fahrkorridor als vorausfahrendes Ziel-KFZs ermittelt um auf dieses KFZ den Abstand durch Eingriff in die Motorsteuerung, die Getriebesteuerung und das Bremssystem zu regeln. Damit ist es dem eigenen KFZ möglich, einem vorausfahrenden Fahrzeug mit einem (ggf. von der Geschwindigkeit und anderen Faktoren abhängigen) Sicherheitsabstand zu folgen, wobei die Festlegung und Einhaltung des Sicherheitsabstandes durch vom Fahrer unabhängige Eingriffe in das Motorsteuerungssystem und in das Bremssystem des eigenen KFZs vorgenommen wird. Der Fahrer gibt in der Regel nur eine Wunschgeschwindigkeit des eigenen KFZs und/oder einen Wunschabstand des eigenen KFZs von einem ZielKFZ vor. Mit anderen Worten stellt die Erfindung ein System zur Auswertung der Fahrumgebung eines KFZs und zur Beeinflussung der Geschwindigkeit des KFZs bereit. Dieses System hat eine elektronische Steuereinheit, die mit einem ein für die Wunschgeschwindigkeit / Wunschabstand des KFZs charakteristisches Signal erzeugenden Signalgeber verbunden ist. Ausserdem wird der elektronischen Steuereinheit die momentane (Ist-)Geschwindigkeit des eigenen KFZs zugeführt. Ausserdem ist die elektronische Steuereinheit mit einem ein für die Drehrate des KFZs um dessen Hochachse charakteristisches Signal erzeugenden Signalgeber verbunden. Weiterhin ist die elektronische Steuereinheit mit einem Signalgeber verbunden, der für in dem in Fahrtrichtung des KFZs vor dem KFZs liegenden Raum befindliche Objekte hinsichtlich deren Abstand und Orientierung zu dem KFZ charakteristisches Signal erzeugt. Hierbei kann es sich um einen Radarsensor, einen Ultraschall-, oder Infrarotsensor, aber auch um ein Bildsensor (Videokamera) handeln. Der mit dem Sensor abgetastete Raum ist etwa Kegel- oder keulenförmig und hat abhängig von den tatsächlichen Umgebungs-Gegebenheiten eine Länge von etwa 100 - 250 Metern und einen Öffnungswinkel von etwa 12°. Eine sichere Erfassung/Auswahl kann damit für Objekte erfolgen, die sich im Abstand von etwa 170 +/- 30 Metern vom eigenen KFZ entfernt befinden bzw. vor diesem sich innerhalb dieses Bereiches bewegen. Schließlich ist die elektronische Steuereinheit mit einem ein für die Geschwindigkeit wenigstens eines Rades des KFZs charakteristisches Signal erzeugenden Signalgeber verbunden. Dies kann zum Beispiel der Drehzahlgeber des Anti-Blockier-Systems (ABS) sein. In der elektronischen Steuereinheit werden die Signale aus diesen Signalgebern mittels einer oder mehreren Rechnereinheit(en) verarbeiten. Die dabei ermittelten Ergebnisse werden als Ausgangssignale, welche von dem Fahrverhalten des vor dem eigenen KFZ befindlichen KFZs abgeleitet sind, von der elektronischen Steuereinheit wenigstens einem Steuergerät zugeführt, das auf das Fahrverhalten des eigenen KFZs Einfluss nimmt. Da die Erfassung der Objekte in einem zeitlichen Raster von wenigen zig Millisekunden (zum Beispiel 50 Millisekunden) erfolgt, lassen sich in der elektronische Steuereinheit die zeitlichen Änderungen der Positionen der einzelnen Objekte feststellen. Unter Berücksichtigung der Bewegung(en) des eigenen KFZs können auch Bewegungen der Objekte sowie ggf. deren Relativ-Geschwindigkeit in der elektronischen Steuereinheit berechnet werden. Daraus werden dann in der elektronischen Steuereinheit dem Objekt auch die Eigenschaften "stillstehend", "bewegt sich im wesentlichen in der gleichen Richtung wie das eigene KFZ", oder "bewegt sich im wesentlichen in der entgegengesetzten Richtung wie das eigene KFZ" zugeordnet. Mit anderen Worten wird aus Signalen von dem Signalgeber, der ein für in dem in Fahrtrichtung des KFZs vor dem KFZs liegenden Raum befindliche Objekte hinsichtlich deren Abstand und Orientierung zu dem KFZ charakteristisches Signal erzeugt, für in dem Raum befindliche Objekte wenigstens deren Geschwindigkeit relativ zur Geschwindigkeit des eigenen KFZes, deren Abstand relativ zum eigenen KFZ, sowie der Winkelversatz oder die Seitenablage relativ zur Längsachse des eigenen Fahrzeuges kontinuierlich erfasst und in der elektronischen Steuereinheit ausgewertet. Hierbei wird aus praktischen Gründen die Anzahl der beobachteten Objekte begrenzt. Stehende Ziele, also solche deren Relativ-Geschwindigkeit in Fahrtrichtung des eigenen KFZs gleich der Geschwindigkeit des eigenen KFZs mit entgegengesetzten Vorzeichen ist, werden ausgeschlossen. Nahe beim eigenen KFZ befindliche Objekte werden gegenüber weiter entfernt liegenden Objekte bevorzugt. Alle Objekte, die als Ziel-Objekte aufgrund der vom Radarsensor erfassten Signale von der elektronischen Steuereinheit überhaupt als in Frage kommend eingestuft werden, sind in einer Objekt-Tabelle geführt, in der auch die jeweiligen Eigenschaften und Daten der Objekte mitgeführt und anhand der laufenden (Neu-)Berechnungen durch die elektronische Steuereinheit eingetragen bzw. aktualisiert werden. Insbesondere zur Verringerung der möglichen Ziele, die sich auf der Fahrbahn vor dem eigenen KFZ befinden, wird in der Regel nicht der gesamte Erfassungsraum - begrenzt durch den Öffnungswinkel des (Radar-)Sensors ausgewertet, sondern ein demgegenüber verringerter Bereich. Diese Maßnahme reduziert die Anzahl der zu betrachtenden Objekte. Der Einfachheit halber wird jedoch - sofern nicht explizit darauf hingewiesen wird - nachfolgend davon ausgegangen, dass der tatsächlich ausgewertete Bereich und der Erfassungsraum vor dem eigenen KFZ übereinstimmen. Wie vorstehend erläutert, ist eine Stufe bei der Ermittlung des vom eigenen KFZ zu "verfolgenden" KFZs die Bestimmung der eigenen Fahrspur. Diese ist durch ihre Mittellinie, ihre Breite, bzw. näherungsweise durch Abschnitte mit konstantem Krümmungsradius festgelegt. Das vorliegende System modifiziert zur Festlegung der Mittellinie der eigenen Fahrspur im vor dem KFZs erfassten Raum den Krümmungsradius R der Bahnkurve des Schwerpunktes des eigenen KFZs anhand der Änderung der Winkelpeilung der voranfahrenden Objekte und der absoluten Lage der voranfahrenden Objekte gegenüber der momentan prädizierten Fahrspur in der elektronischen Steuereinheit. Hierbei wird als Ausgangswert für den Krümmungsradius R (zum Beispiel bei fehlenden vorausfahrenden Objekten) die Geschwindigkeit des eigenen KFZs dividiert durch dessen momentane Drehrate bestimmt, welche durch den entsprechenden Signalgeber der elektronischen Steuereinheit zugeführt wird. Der Krümmungsradius der Bahnkurve wird dann durch die Lateralgeschwindigkeiten in Abhängigkeit von sich im vor dem KFZ erfassten Raum bewegenden Objekte in der elektronischen Steuereinheit modifiziert. Einige weitere Kriterien, welche zu einer Veränderung des Krümmungsradius führen bzw. welche von dem in der elektronischen Steuereinheit ablaufenden Programm bei der Aktualisierung des Krümmungsradius berücksichtigt und ausgewertet werden, sind: (i) Die Aufenthaltsdauer der Objekte, die sich im vor dem KFZ durch den Sensor erfassten Raum bewegen, (ii) die Geschwindigkeit in Fahrtrichtung des eigenen KFZs der Objekte, die sich im vor dem KFZ erfassten Raum bewegen, und/oder (iii) der Abstand der Objekte vom eigenen KFZ, die sich im vor dem KFZ erfassten Raum bewegen. Bei niedriger Geschwindigkeit des eigenen KFZs wird der Krümmungsradius auch reduziert, da eine erhöhte Stabilität (Rauscharmut oder Konstanz) des die seitliche Position des KFZs wiedergebenden Signals auf diese Weise erreicht wird. Vorzugsweise wird hierzu in einer Tabelle ein (nicht linearer) Reduktionsfaktor geführt. Das Maß, mit dem Änderungen des Kurvenradius zulässig sind, ist auch vom Kurvenradius selbst abhängig. Bei sehr kleinem Kurvenradius wird eine relativ hohe Änderungsrate zugelassen. Insbesondere bei Kurvenausgängen wird dann erreicht, dass auf einer der Kurve folgenden geraden Strecke die korrekte Spur des voranfahrenden KFZes, welches als Ziel-KFZ ausgewählt wurde - aber auch die eigene Spur - wieder schnell gefunden wird. Das erfindungsgemäße System gibt sich eine Breite der eigenen Fahrspur vor, welche zunächst von den Fahrzeugabmessungen zuzüglich eines Sicherheitszuschlages von etwa 0.2 - 0.7 Meter auf jeder Seite abhängt. Auf einer geraden Strecke hätte damit die eigene Fahrspur eine im wesentlichen rechteckige Gestalt, deren - zu jedem Zeitpunkt betrachtete - Länge etwas geringer als die Reichweite des Radar-Sensors ist. Diese im wesentlichen rechteckige Fahrspur hat wird in der elektronischen Steuereinheit als Datenstruktur nachgebildet. Dabei wird die Breite der Fahrspur im Nahbereich (etwa 0 - 50 Meter) und im Fernbereich (150+ Meter) geringer als im Mittelbereich (50 - 150 Meter) festgelegt. Um die Datenstruktur in der elektronischen Steuereinheit möglichst effizient zu halten wird bei dem erfindungsgemäßen System die Breite der eigenen Fahrspur nur an solchen Stellen im Raum vor dem eigenen KFZ in der elektronischen Steuereinheit festgelegt, an denen sich im erfassten Raum vor dem eigenen KFZ auch Objekte befinden. Das System modifiziert in der elektronischen Steuereinheit die Breite der eigenen Fahrspur in Abhängigkeit von der Entfernung erfasster Objekte im Raum vor dem eigenen KFZ und der Orientierung einer Kurve in der elektronischen Steuereinheit so, dass in großer Entfernung (150+ Meter) die Breite auf der Kurvenaußenseite abnimmt und die Breite in mittlerer Entfernung (50 - 150 Meter) auf der Kurveninnenseite zunimmt. Diese Vorgehensweise reduziert die Auswahl von ungünstigen Objekten als Ziel-KFZe, welche vom eigenen Fahrzeug "verfolgt" werden. Damit geringe Lateralbewegungen des zu verfolgenden Ziel-KFZs nicht dazu führen, dass diese Lateralbewegungen als Spurwechsel dieses KFZs von der elektronischen Steuereinheit erkannt werden, wird die Breite der eigenen Fahrspur (und damit auch die Fahrspur des zu verfolgenden Ziel-KFZs ) in der elektronischen Steuereinheit (ECU) nach beiden Seiten an der Stelle verbreitert, an der sich das Ziel-KFZ befindet. Gleichermaßen wird auch die eigene Fahrspur in der ECU in Abhängigkeit von der Dauer, mit der das Fahrverhalten des eigenen KFZs vom Fahrverhalten dieses Ziel-KFZs abhängig ist, nach beiden Seiten an der Stelle verbreitert, an der sich das Ziel-KFZ befindet. Zusätzlich oder anstatt der vorstehenden Maßnahme zur Stabilisierung des Fahrverhaltens des eigenen KFZs kann die Breite der eigenen Fahrspur in der ECU auch in Abhängigkeit von der Kurvigkeit der Straße modifiziert werden, auf der sich das eigene KFZ befindet. Insbesondere wird hierbei die Breite verringert wenn die Straße sehr kurvig ist. Hierzu wird in der ECU der momentan und ggf. auch der nur geringe Zeit zurückliegende Krümmungsradius ausgewertet. Bei einem geringen Krümmungsradius wird die Breite verringert. Gleiches gilt für die ebenfalls erfindungsgemäße Maßnahme, die Breite der eigenen Fahrspur in der ECU in Abhängigkeit von der Geschwindigkeit des eigenen KFZs zumindest abschnittsweise zu modifizieren. Bei hoher Geschwindigkeit des eigenen KFZs wird die Breite der eigenen Fahrspur erhöht um zu vermeiden, dass das Ziel-KFZ bereits aufgrund geringer Lateral-Bewegungen des eigenen oder des verfolgten KFZs aus der Verfolgung "verloren" wird. Ein weiteres Kriterium bei der Ermittlung des optimalen vorausfahrenden Ziel-Fahrzeuges, von dessen Fahrverhalten das Fahrverhalten des eigenen KFZs abhängig gemacht werden soll, ist die Ermittlung der Fahrspuren der Straße, auf denen das eigene KFZ sich bewegt. Hierbei wird nicht nach - häufig auch nicht vorhandenen - Begrenzungsmarkierungen der Fahrspur gesucht. Vielmehr wird das Verhalten der im Raum vor dem eigenen KFZ sich bewegenden anderen Objekte ausgewertet um daraus Rückschlüsse zu ziehen, wie viele Fahrspuren die Straße hat, und auf welcher dieser Fahrspuren sich das eigene KFZ bewegt. Das erfindungsgemäße System führt für drei Fahrspuren in der Fahrtrichtung des eigenen KFZs sowie für drei Fahrspuren in der entgegengesetzten Fahrtrichtung sog. Spurlisten. Grundsätzlich wird dazu für jedes sich bewegende Objekt aus der Objekt-Tabelle in der ECU der zeitliche Verlauf der Seitenablage (also der laterale Versatz des jeweiligen Objektes gegenüber der Mittelachse des eigenen KFZs und/oder der Verlauf der prädizierten Fahrspur) durch eine Tiefpass-Filterung mit einer kurzen Zeitkonstante geglättet und anschließend integriert. Um aus der Objekt-Tabelle die Spur-Listen zu generieren und aktuell zu halten wird zunächst die eigene Fahrspur ermittelt. Dazu werden Objekte an den seitlichen Rändern des erfassten Raums mit einem geringen Gewichtungsfaktor belegt und Objekte im Mittelbereich des erfassten Raums mit einem höheren Gewichtungsfaktor belegt. Gleichermaßen werden sehr weit entfernte Objekte und sehr nahe Objekte mit einer großen Seitenablage mit einem geringen Gewichtungsfaktor belegt. Alle gering bewerteten Objekten haben gemeinsam, dass ihre genaue seitliche Position nur schwer bestimmt werden kann und auch mit einer hohen Ungenauigkeit behaftet ist. Daher sollen sie bei der Fahrspurbestimmung nur in einem geringen Umfang eine Bedeutung haben. Aus den so gewichteten Objekten wird unter Einbeziehung der Bewegungen des eigenen KFZs in der ECU die eigene Fahrspur ermittelt. Unter Zugrundelegung dieser Ergebnisse für die einzelnen Objekte werden sich bewegende Objekte in der ECU als Objekte in der eigenen Fahrspur klassifiziert, wenn ein weiter als eine Mindestentfernung entferntes Objekt während eines vorbestimmten Zeitrahmens eine Auftrittsdauer in der eigenen Fahrspur hat, die zur Summe der Auftrittsdauer in einer oder beiden Nachbarspuren ein Verhältnis hat, das einen von der Entfernung des Objektes abhängigen Schwellenwert überschreitet. Ausgehend von der vorstehenden Bestimmung der Objekte in der eigenen Fahrspur kann zu Optimierung und zur Anpassung der Funktion an unterschiedliche Randbedingungen und Umgebungen der vorbestimmte Zeitrahmen in Abhängigkeit von der Geschwindigkeit des eigenen KFZs in der ECU modifiziert werden. Außerdem kann der Schwellenwert mit geringer werdender Entfernung des Objektes von dem eigenen KFZ in der ECU verringert werden. Schließlich werden im Raum vor dem eigenen KFZ erfasste, sich bewegende Objekte in der ECU als Objekte in der links oder rechts von der eigenen Fahrspur befindliche Objekte klassifiziert, wenn sich ein Objekt links von der linken Begrenzung der eigenen Fahrspur bzw. rechts von der rechten Begrenzung der eigenen Fahrspur in der entsprechenden Entfernung befindet. Für die entgegenkommenden KFZe wird anhand ihrer Fahrtrichtungsangabe und ihrer jeweiligen Seitenablage ebenfalls eine Fahrspurenzuordnung vorgenommen. Insgesamt wird erfindungsgemäß die Aufenthaltsdauer aller Objekte für die vorhandenen Fahrspuren in Bezug auf die eigene Fahrspur ermittelt und über die Zeit gewichtet, wobei zeitlich neuere Auftritte von Objekten in der Fahrspur des eigenen KFZs höher bewertet werden als zurückliegende Aufritte, und räumlich entfernt liegende Auftritte von Objekten in der Fahrspur des eigenen KFZs geringer bewertet werden als räumlich näher liegende Auftritte. Damit wird erreicht, dass eine sichere Bestimmung der Objekte als in der eigenen Fahrspur fahrend vorgenommen wird. Dies verringert bei der Auswahl des Ziel-Objektes, hinter dem "herzufahren" ist, die Wahrscheinlichkeit einer Fehl-Auswahl. Aus den vorhandenen Fahrspuren werden nun jeweils maximal zwei sich bewegende Objekte in der ECU ausgewählt und als Prioritäts-Objekte gekennzeichnet, wenn sie während eines über einem Mindestwert liegenden Zeitraums als sich vor dem eigenen KFZ bewegend erfasst wurden, wobei diese jeweilige Dauer jedes Objektes für sehr nahe zum eigenen KFZ ( ca. 0 - ca. 30 m) befindliche Objekte geringer gewichtet wird. Damit ist die Anzahl der Kandidaten, aus denen das Ziel-KFZ ausgewählt wird, schon stark eingeschränkt. Ausserdem sind diese maximal sechs Objekte diejenigen, welche für das Fahrverhalten des eigenen KFZs von herausragender Bedeutung sind. Daher ist es in erster Näherung ausreichend diese sechs Objekte zu betrachten um daran das momentane Fahrverhalten des eigenen KFZs auszurichten. Dabei wird für jedes Prioritäts-Objekt in der ECU ermittelt, wie weit jedes Prioritäts-Objekt seine seitliche Lage relativ zur Mittellinie der Fahrspur des eigenen KFZs verändert. Hierbei wird als Änderungswert der Fahrspur des eigenen KFZs im jeweiligen Abstand zum eigenen KFZ die Summe der Mittelwerte der seitlichen Lageänderungen der Prioritäts-Objekte ermittelt. In der ECU wird nun aus den Prioritäts-Objekten dasjenige als Ziel-KFZ auswählt, von dessen Fahrverhalten das Fahrverhalten des eigenen KFZs abhängig sein soll, welches (i) sich in der Fahrspur des eigenen KFZs bewegt, (ii) eine Bewegungsrichtung über Grund hat, die im wesentlichen mit der Bewegungsrichtung des eigenen KFZs übereinstimmt; und (iii) bereits während einer vorbestimmten Zeitdauer im Raum vor dem eigenen KFZ erfasst wurde. Das in der ECU ablaufende Programm wählt aus den Prioritäts-Objekten vorzugsweise dasjenige als Ziel-KFZ aus, von dessen Fahrverhalten das Fahrverhalten des eigenen KFZs abhängig sein soll, bei dem die Quergeschwindigkeit relativ zur Mittellinie der eigenen Fahrspur einen Schwellenwert nicht überschreitet. Hierzu wird vorzugsweise für die einzelnen Objekte deren Seitenablage aus der Ziel-Liste nach der Zeit differenziert. Hierbei ist der Schwellenwert in Abhängigkeit vom Abstand des jeweiligen Objektes zum eigenen KFZ veränderbar. Diese Maßnahmen stellen sicher, dass vorzugsweise ein KFZ als das zu verfolgende Ziel-KFZ ausgewählt wird, welches ein relativ ruhiges Fahrverhalten hat. Als Folge hiervon ist auch die Wahrscheinlichkeit gering, dass dieses ausgewählte KFZ "aus der Sensor-Erfassung verloren geht", was wiederum zu einem ruhigeren Fahrverhalten des eigenen KFZs führt. Als weitere Verbesserung der Erfassungssicherheit, insbesondere zur Vermeidung von Spiegeleffekten des Sensorstrahls (an der Fahrbahnbegrenzung oder an anderen - sich ggf. bewegenden - Objekten) wird durch die elektronische Steuereinheit in der Zielliste für jedes Objekt ein Wert vorgehalten und regelmäßig aktualisiert, der die Rauschamplitude des Peilwinkels zu jedem der Objekte wiedergibt. Für alle Objekte wird in der ECU der zeitliche Verlauf dieses Wertes mittels eines Tiefpasses geglättet. Wenn der geglättete Wert-Verlauf für ein Objekt einen entfernungsabhängigen Schwellenwert überschreitet, wird dieses Objekt von der Auswahl als Ziel-KFZ ausgeschlossen. Eine weitere Maßnahme zur Erhöhung der Stabilität des Systems - also zur Vermeidung von Fehl-Auswahlen - besteht darin, dass die elektronische Steuereinheit ein Prioritäts-Objekt aus der Ziel-Liste von der Auswahl als Ziel-KFZ ausschließt, wenn (i) dessen Abstand zum eigenen KFZ geringer ist als ein Entfernungs-Schwellenwert, (ii) der Absolutwert des Peilwinkels zu diesem Prioritäts-Objekt größer ist als ein Winkel-Schwellenwert (zum Beispiel 4°), und (iii) dieses Prioritäts-Objekt bisher nicht als Ziel-KFZ ausgewählt war.
Damit wird sichergestellt, dass ein - unnötiger - Wechsel des Ziel-KFZs oder ein Hin- und Herspringen zwischen zwei (vermeintlich) "gleich guten" Objekten unterbleibt. Dies hat den positiven Effekt, dass ein mit dem Wechsel auf ein neues Ziel-KFZ verbundenes Ansteigen oder Absenken der Geschwindigkeit des eigenen KFZs unterbleibt. Das erfindungsgemäße System wertetet für das Ziel-KFZ die Änderung des Peilwinkels gesehen vom eigenen KFZ sowie die Drehrate für das eigene KFZ kontinuierlich aus um einen Spurwechsel des eigenen KFZs zu erkennen. Dazu wird ermittelt, ob die Änderung des Peilwinkels zum Ziel-KFZ, von dessen Fahrverhalten das Fahrverhalten des eigenen KFZs abhängig sein soll, über einem bestimmten Schwellenwert liegt und im wesentlichen gleich der Drehrate des eigenen KFZs mit inversem Vorzeichen ist. Um zu erkennen, ob das eigene KFZ sich in einer Kurvenfahrt befindet, wird in der ECU eine mit der Krümmung der Fahrspur des eigenen KFZs in Beziehung stehende Größe als Eingangssignal parallel mehreren TP-Filtern mit unterschiedlichen Zeitkonstanten (niedriger, vorzugsweise 1. Ordnung ) zugeführt. Die Ausgangssignale der TP-Filter und das Eingangssignal werden miteinander verglichen. Wenn die (Amplituden der) Ausgangssignale einen jeweiligen Mindestabstand zu einander haben und das Ausgangssignal eines jeweiligen Tiefpass-Filters geringer ist als das Ausgangssignal eines Tiefpass-Filters mit einer geringeren Zeitkonstante und größer ist als das Ausgangssignal eines Tiefpass-Filters mit einer größeren Zeitkonstante; oder das Ausgangssignal eines jeweiligen Tiefpass-Filters größer ist als das Ausgangssignal eines Tiefpass-Filters mit einer geringeren Zeitkonstante und geringer ist als das Ausgangssignal eines Tiefpass-Filters mit einer größeren Zeitkonstante, wird im Straßenverlauf des eigenen KFZs ein Übergang von einer Kurve einer Orientierung zu einer Kurve entgegengesetzter Orientierung erkannt. Wenn die elektronische Steuereinheit festgestellt hat, dass das eigene KFZ sich in einem Kurvenübergang, zum Beispiel einer S-Kurve befindet, wird die Länge der ausgewerteten Fahrspur reduziert, da in dieser Situation oftmals unterschiedliche Objekte ihre Seitenablage sehr stark ändern. Bei verringerter Auswertungslänge fallen insbesondere in größerem Abstand vor dem eigenen KFZ herfahrende Objekte aus der Betrachtung heraus. Da die Wahrscheinlichkeit, dass ein in größerem Abstand vor dem eigenen KFZ herfahrendes Objekt fälschlicherweise in der eigenen Fahrspur erscheint, in einer solchen Situation relativ hoch ist, wird durch Verringerung der Auswertelänge die Fehlerquote gesenkt. Ein wesentlicher Aspekt bei der Umgebungserkennung ist die Straßenarterkennung. Die Straßenarterkennung ist von Vorteil bei einer optimalen Abstimmung bei der Auswahl des Ziel-KFZ und bei der Regelung der Geschwindigkeit des eigenen KFZes. Dies beruht auf der Erkenntnis, dass unterschiedliche Straßenarten eine erheblich voneinander abweichende Abstimmung einzelner Systemparameter (Länge und Breite der ausgewerteten Fahrspur/en, Beschleunigungsschwellen, etc.) erfordern um das System optimal zu betreiben, das heißt so, dass es möglichst genau der Erwartungshaltung des Fahrers entspricht. Das erfindungsgemäße System wertet die Geschwindigkeit des eigenen KFZes, die Anzahl der erkannten Fahrspuren mit der gleichen Fahrtrichtung wie die des eigenen KFZes, der Krümmung der Fahrspuren, etc. aus Um dies zu realisieren wird erfindungsgemäß ein Kennwert ermittelt, der fließende Übergänge hat und als Umgebungsgeschwindigkeit definiert ist. Dieser Kennwert hat die Dimension Geschwindigkeit (Weg/Zeit). Das erfindungsgemäße System ermittelt zur Unterscheidung der Art der Straße, auf der das eigene KFZ fährt, für wenigstens zwei unterschiedliche Straßen-Umgebungen (Stadtverkehr, Landstraße, Autobahn) in der ECU Kennwerte, wobei eine den jeweiligen Kennwert beeinflussende Größe die aus den Geschwindigkeiten der im Raum vor dem eigenen KFZ erfassten Objekte sowie der Geschwindigkeit des eigenen KFZs ermittelte, vorzugsweise durch Mittelwertbildung bestimmte, Umgebungs-Geschwindigkeit ist. Dabei haben die Straßen-Umgebungen keine starren Grenzwerte sondern fließende Grenzen. Der Wert "Umgebungs-Geschwindigkeit" liegt, sofern er im Bereich "Autobahn" liegt, etwa bei 120 km/h - 150 km/h. Dies gilt, auch wenn die tatsächlich gefahrene Geschwindigkeit des KFZs momentan geringer oder höher ist. Im Bereich "Landstraße" liegt der Wert bei etwa 60 km/h - 100 km/h. Im Bereich "Stadtverkehr" liegt der Wert bei etwa 30 km/h - 50 km/h. Aufgrund einer Fahrt über längere Zeit hinweg mit längerer hoher Geschwindigkeit und geringen Lenkausschlägen erhöht die elektronische Steuereinheit stufenweise den Wert "Umgebungs-Geschwindigkeit" soweit, dass er in den Bereich "Autobahn" (120 km/h - 150 km/h) kommt. Durch einen Fahrabschnitt mit einem Kurvenradius und mit einer Länge, wie sie üblicherweise bei Autobahnausfahrten vorkommen und entsprechender erheblich verringerter Geschwindigkeit, wird der Wert "Umgebungs-Geschwindigkeit" mit einer hohen Rate auf einen Wert von zum Beispiel 50 km/h - 70 km/h zurückgeführt, der dem Bereich "Landstraße" entspricht, auch wenn die momentan gefahrene Geschwindigkeit darüber liegt. Bei dem erfindungsgemäßen System wird in der ECU der Wert "Umgebungs-Geschwindigkeit" von einem momentanen Betrag an die tatsächlich gefahrene Geschwindigkeit des eigenen KFZs über eine vordefinierte Funktion (zum Beispiel Rampe, Stufe) angenähert. Vorzugsweise erfolgt eine Annäherung von einem höheren Wert als dem momentanen Betrag der tatsächlich gefahrenen Geschwindigkeit mit einer ersten Geschwindigkeitsrate und eine Annäherung von einem niedrigeren Wert als dem momentanen Betrag der tatsächlich gefahrenen Geschwindigkeit mit einer zweiten, vorzugsweise erheblich höheren als der ersten Geschwindigkeitsrate. Auf diese Weise wird sichergestellt, dass Geschwindigkeitsabfälle von kurzer Dauer, zum Beispiel auf der Autobahn im Bereich einer Baustelle, oder aufgrund eines in die Fahrspur des eigenen KFZs hineinscherenden langsameren KFZs kein sofortiges Zurückfallen in den Wertebereich "Landstraße" oder gar "Stadtverkehr" hervorrufen. Weiterhin wird in der ECU der Wert "Umgebungs-Geschwindigkeit" über eine vordefinierte Funktion (zum Beispiel Rampe, Stufe) erhöht, wenn sich vor dem eigenen KFZ wenigstens zwei im wesentlichen nebeneinander her fahrende andere Objekte befinden und das eigene KFZ eine tatsächliche Geschwindigkeit fährt, die im Bereich "Landstraße" liegt. Hierbei erfolgt eine Erhöhung des Wertes "Umgebungs-Geschwindigkeit" mit einer dritten, vorzugsweise erheblich höheren als der zweiten Geschwindigkeitsrate. Insbesondere kann hierbei ein oberer Schwellenwert erreicht werden, wenn längere Zeit auf einer außerhalb einer Ortschaft liegenden mehrspurigen Kraftfahrstrasse eine relativ hohe Geschwindigkeit erreicht wird. Ausserdem wird der Wert "Umgebungs-Geschwindigkeit" auf einen unteren Grenzwert über eine vordefinierte Funktion (zum Beispiel Rampe, Stufe) reduziert, wenn sich aus dem Wert "Umgebungs-Geschwindigkeit" und der momentanen Drehrate des eigenen KFZs eine Querbeschleunigung ergäbe, die einen Schwellenwert übersteigt. In diesem Fall erfolgt die Absenkung des Wertes "Umgebungs-Geschwindigkeit" mit einer vierten, vorzugsweise erheblich höheren als der dritten Geschwindigkeitsrate. Dies stellt sicher, dass in engen Kurven sehr schnell eine Absenkung des Wertes "Umgebungs-Geschwindigkeit" erfolgt. Schließlich ist der Wert "Umgebungs-Geschwindigkeit" auf ein vorbestimmbares Vielfaches (zum Beispiel 1.2) der Wunschgeschwindigkeit des KFZs begrenzt. Dieser Maßnahme liegt die Überlegung zugrunde, dass bei einem Wechsel der Umgebung zum Beispiel von Stadtverkehr auf Landstraße oder Autobahn eine vom Fahrer vorgenommene Änderung der Wunschgeschwindigkeit folgt. Somit kann auch bei relativ zügigem Verkehr auf mehrspurigen Straßen außerhalb von Ortschaften nicht ohne einen Eingriff des Fahrers das Geschwindigkeits-Niveau "Autobahn" erreicht werden. Der Wert "Umgebungs-Geschwindigkeit" kann maximal einen vorbestimmbaren unteren Grenz-/Schwellenwert und einen vorbestimmbaren oberen Grenz-/Schwellenwert annehmen. Der Krümmungsverlauf der vom eigenen KFZ befahrenen Fahrspur wird bei dem erfindungsgemäßen System nach dem Weg differenziert. In Abhängigkeit von dem Ergebnis wird ein Kennwert "Kurvigkeit" bestimmt, der von der Geschwindigkeit des eigenen KFZs unabhängig ist. Das Ergebnis der Differenzierung des Krümmungsverlaufs der vom eigenen KFZ befahrenen Fahrspur wird ausserdem in der ECU ausgewertet um bei langen geraden Abschnitten der Fahrspur über einer bestimmten Wegstrecke in Abhängigkeit von dem Ergebnis den Kennwert "Kurvigkeit" mit einer vorbestimmten Rate zu verringern. Das Ergebnis der Differenzierung des Krümmungsverlaufs der vom eigenen KFZ befahrenen Fahrspur wird ausserdem in der ECU ausgewertet um bei S-Kurven (zwei gegenläufige Kurvenabschnitte ohne gerades Zwischenstück) in Abhängigkeit von dem Ergebnis den Kennwert "Kurvigkeit" mit einer vorbestimmten Rate zu erhöhen. Bei dem erfindungsgemäßen System wird in der ECU bei Vorliegens eines Signals, das eine über einem ersten vorbestimmten Wert liegende Krümmung des Fahrspur des eigenen KFZs wiedergibt, der Kennwert "Kurvigkeit" mit einer hohen Rate um einen dynamischen Anteil erhöht und bei Wegfallen des über einem zweiten vorbestimmten Wert liegenden Drehratensignals der dynamische Anteil wieder zurückgeführt. Damit wird insbesondere für Kurvenfahrten mit kleinem Kurvenradius eine schnelle Verringerung des Wertes "Umgebungs-Geschwindigkeit" erzielt, ohne dass dies zum Beispiel beim Durchfahren von Autobahnkreuzen oder Autobahndreiecken zum Verlassen des Bereiches "Autobahn" für den Wert "Umgebungs-Geschwindigkeit" führt. Um die Verringerung der Falschzielauswahl weiter zu verbessern, wird außerdem bei dem erfindungsgemäßen System in der ECU der dynamische Anteil bei Rechtsverkehr nur für Rechtskurven und bei Linksverkehr nur für Linkskurven zu dem Wert "Kurvigkeit" addiert bzw. von diesem wieder subtrahiert. Vorzugsweise wird in der ECU der dynamische Anteil abhängig von der durchschnittlichen Krümmung der Fahrspur und der Fahrtrichtungsänderung seit Kurveneingang modifiziert. Dabei ist der Kurveneingang definiert als der Zeitpunkt, an dem das Krümmungssignal des ersten vorbestimmten Schwellenwert überschreitet. Die Fahrtrichtungsänderung ergibt sich aus dem Integral der Gierrate des KFZs über der Zeit. Bei der Auswahl des Ziel-KFZs besteht das Problem, dass eine angestrebte, möglichst frühe Erfassung möglicher Ziel-Objekte zwar zu einer erhöhten Stabilität oder Ruhe beim "Nachfahren" dieses bereits sehr weit vor dem eigenen KFZ erfassten Ziel-KFZs führt. Insbesondere bei kurvigen Autobahnen steigt allerdings dabei auch die Gefahr, dass ein falsches Ziel-KFZ ausgewählt wird, das sich tatsächlich nicht in der eigenen Fahrspur befindet. Daher stellt die Erfindung eine Vorgehensweise bereit, die eine Abschätzung erlaubt, wie anfällig die aktuelle ZielAuswahl für eine Falschauswahl aufgrund der Umgebungssituation ist. Dabei werden bei dem erfindungsgemäßen System in Abhängigkeit von dem Kurvigkeitswert aus den Prioritäts-Objekten diejenigen von der Auswahl als Ziel-KFZ ausgeschlossen, welche von dem eigenen KFZ weiter entfernt sind als andere. Um die Auswahl von Prioritätsobjekten möglichst treffsicher und Effizient zu gestalten ist es von Vorteil, wenn das System über die Information verfügt, ob das eigenen KFZ sich in einer Umgebung mit Links- oder mit Rechtsverkehr bewegt. Ausgehend hiervon kann eine Asymmetrierung der Auswahl vorgenommen werden. Erfindungsgemäß werden basierend auf dieser Information KFZe in der "langsameren" oder "schnelleren" Fahrspur als der eigenen eher als "Falsche Prioritätsziele" von der Auswahl ausgeschlossen als andere, in der eigenen Fahrspur befindliche. Außerdem wird erfindungsgemäß nach dem Ausscheren in die "schnellere" Fahrspur eine höhere Beschleunigung vorgenommen, etc. Dazu wird erfindungsgemäß bei einem (aktiven oder passiven) Überholvorgang ermittelt, auf welcher Seite sich beim Überholen das überholende KFZ befindet. Hierzu wird in der ECU für vor dem eigenen KFZ in den vorhandenen Fahrspuren herfahrende KFZe deren Geschwindigkeit ermittelt und hieraus einen Kennwert ableitet, der angibt, ob das eigene KFZ sich in Links- oder in Rechtsverkehr befindet. Dazu wird von einer vorbestimmten Anzahl der vor dem eigenen KFZ in den vorhandenen Fahrspuren herfahrenden KFZe die zurückgelegte Strecke oder eine damit korreliert Größe ermittelt und zu der entsprechenden Größe für das eigene KFZ in Beziehung gesetzt, indem der Kennwert als Summe der Differenzen der Geschwindigkeiten der KFZe einer ersten, vorzugsweise der linken Fahrspur und der Geschwindigkeiten der KFZe einer zweiten, vorzugsweise der rechten Fahrspur bestimmt wird. Zur Erhöhung der Sicherheit bei der Erkennung wird ein oberer Schwellenwert und ein unterer Schwellenwert bestimmt, wobei die elektronische Steuereinheit ein Signal "Rechtsverkehr" erzeugt und abspeichert, wenn der Kennwert den oberen Schwellenwert überschreitet, und die elektronische Steuereinheit ein Signal "Linksverkehr" erzeugt und abspeichert, wenn der Kennwert den unteren Schwellenwert unterschreitet. Vorzugsweise werden nur Geschwindigkeiten von KFZen berücksichtigt, die einen vorbestimmten Schwellenwert überschreiten. Dies vermeidet Fehlauswertungen aufgrund von Kolonnenverkehr oder in Ortschaften. Um Fehler bei der Spurzuordnung zu vermeiden, werden nur dann vor dem eigenen KFZ herfahrende KFZe ausgewertet, wenn der Radius der Fahrspur einen vorbestimmten Schwellenwert überschreitet. Zur weiteren Erhöhung der Auswahlsicherheit kann zusätzlich oder an Stelle der Auswertung der Geschwindigkeiten der KFZe in der gleichen Fahrtrichtung wie das eigene KFZ auch die Ermittlung treten, auf welcher Seite des eigenen KFZs sich KFZe mit entgegengesetzter Fahrtrichtung befinden. Dazu wird in der Steuereinheit bei KFZen mit zur Geschwindigkeit des eigenen KFZs negativer Relativgeschwindigkeit, deren Betrag größer ist als die Geschwindigkeit des eigenen KFZs das Vorzeichen des jeweiligen Kennwertes vor dem Aufsummieren invertiert. Dabei kann für KFZe mit zur Geschwindigkeit des eigenen KFZs negativer Relativgeschwindigkeit, deren Betrag größer ist als die Geschwindigkeit des eigenen KFZs der Kennwert mit einem Gewichtungsfaktor versehen werden. Da der Erfassungsraum vor dem eigenen KFZ wie oben erläutert sich im wesentlichen kegelförmig vor der Frontpartie des KFZs symmetrisch zu dessen Mittellängsachse mit einem relativ schmalen Öffnungswinkel ausbreitet, kann es in engen Kurven, zum "Verlust" des Ziel-KFZs kommen. Unmittelbar nach dem Verlust des Ziel-KFZ kann es dann vorkommen, dass die Geschwindigkeit des eigenen KFZs von der ECU erhöht wird. Dies hat zur Folge, dass das KFZ mit erhöhter Geschwindigkeit auf eine Kurvensituation zufährt oder in der Kurve beschleunigt. Folglich muss der Fahrer eingreifen und abbremsen. Um dies zu vermeiden wird erfindungsgemäß, wenn festgestellt wird, dass ein Ziel-KFZ den Erfassungsraum vor dem eigenen KFZ verlässt, in der ECU ein Ansteuersignal erzeugt, das die momentane Geschwindigkeit oder die momentane Beschleunigung des eigenen KFZs wenigstens für eine Strecke auf einen Wert begrenzt, der maximal dem Abstand X zwischen dem eigenen KFZ und dem Ziel-KFZ zum Zeitpunkt dessen Verlassens des Erfassungsraums im wesentlichen entspricht. Auf diese Weise bleibt die Geschwindigkeit des eigenen KFZs solange konstant oder erhöht sich nur geringfügig, bis auch das eigene KFZ die Kurve erreicht hat, bzw. den Ort, an dem das Ziel-KFZ "verloren" wurde. Dies bedeutet einen erheblichen Zugewinn an Komfort und Sicherheit, da selbst auf sehr kurvenreichen Strecken kaum oder keine Bremseingriffe des Fahrers erforderlich sind. Der Fahrer muss im wesentlichen nur noch lenken, während das Ziel-KFZ durch seine Verzögerung vor einem Kurveneingang bzw. Beschleunigung am Kurvenausgang die entsprechende Vorgabe für die elektronische Steuereinheit im eigenen KFZ liefert. Den Zeitraum zwischen dem "Verlieren" und "Wiederfinden" des Ziel-KFZs überbrückt die elektronische Steuereinheit entsprechend. Da der Verlust des Ziel-KFZs in der Regel erst geschieht, wenn dieses sich bereits in der Kurve befindet wird in einer bevorzugten Ausführungsform in der ECU der Abstand X zwischen dem eigenen KFZ und dem Ziel-KFZ zum Zeitpunkt des Verlassens des Erfassungsraums um eine Verkürzungsstrecke DX auf einen effektiven Abstand Xeff verringert. Die Verkürzungsstrecke DX ist von der Umgebung (Autobahn, Landstraße, Stadtverkehr), der Geschwindigkeit des Ziel-KFZs zum Zeitpunkt des Verlassens des Erfassungsraums, der momentanen Geschwindigkeit des eigenen KFZes, den Kurvenradien von innerhalb eines vorbestimmten Zeitraums in der Vergangenheit bereits durchfahrener Kurven, oder dergl. abhängig zu verändern. Dabei kann die Verkürzungsstrecke DX auch aus dem Durchschnitt der Kurvenradien von innerhalb eines vorbestimmten Zeitraums in der Vergangenheit bereits durchfahrener Kurven ermittelt werden. Das Ansteuersignal enthält dabei Information darüber, bzw. ist für eine maximale Zeitdauer charakteristisch, die sich aus der momentanen Geschwindigkeit des eigenen KFZs und dem Abstand X zwischen dem eigenen KFZ und dem Ziel-KFZ zum Zeitpunkt dessen Verlassens des Erfassungsraum oder dem effektiven Abstand Xeff ergibt. Zur weiteren Erhöhung der Auswahlsicherheit des Ziel-KFZs kann auch die Ermittlung treten, ob ein Objekt, das sich im Erfassungsraum vor dem eigenen KFZ befindet, einen vorbestimmten Abstand unterschreitet und sich nicht in der Fahrspur des eigenen KFZs befindet, von der Auswahl als Prioritäts-Objekt ausgeschlossen wird. Diese erfindungsgemäße Strategie trägt dem Umstand Rechnung, dass für Ziele in geringer Entfernung vom eigenen KFZ die Ortsbestimmung nicht mehr mit der erforderlichen Genauigkeit erfolgen kann. Da derartige Objekte über die sog. Nebenkeulen eines Radarsensors noch erfasst werden, erscheint es, als ob aus einer Nachbarspur in die Fahrspur des eigenen KFZs einscheren würden. Weiterhin kann ein Objekt, das zur Mittel-Längsachse des Sensors des eigenen KFZs sich ausserhalb eines vorbestimmten Winkels befindet oder einen vorbestimmten Winkel überschreitet, von der Auswahl als Prioritäts-Objekt ausgeschlossen werden. Gleiches gilt für ein Objekt, das während eines vorbestimmten Zeitraums in der Vergangenheit nicht Ziel-KFZ war.

### Kurzbeschreibung der Zeichnung

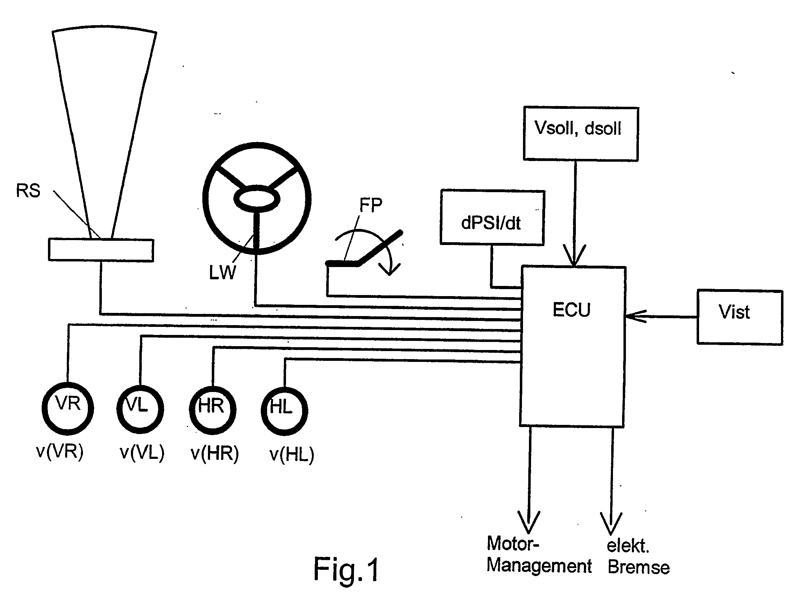

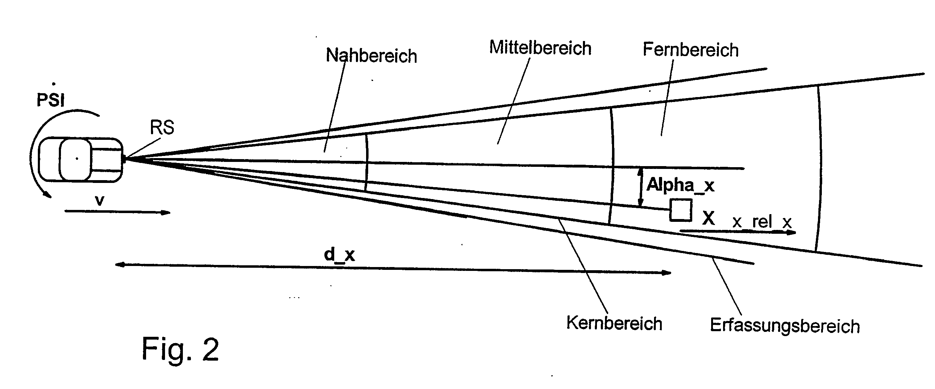

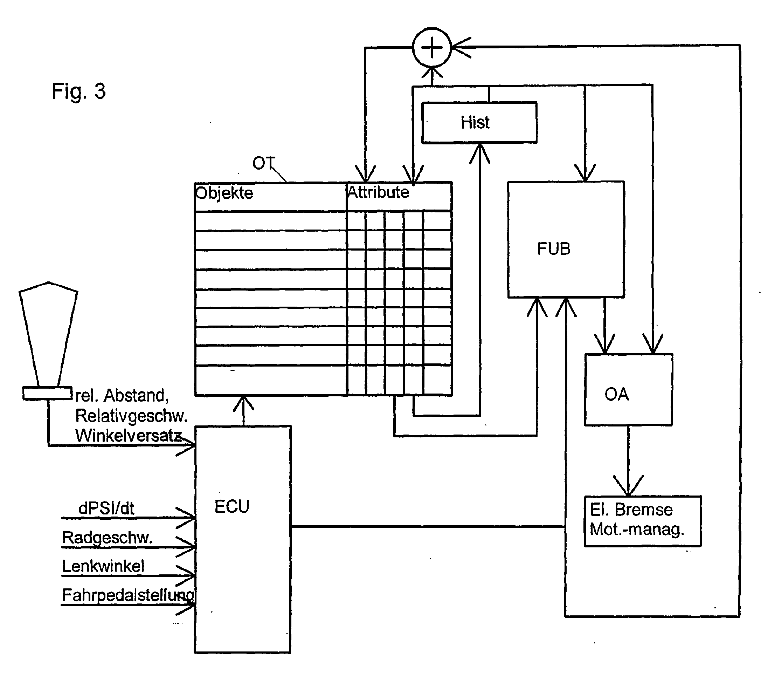

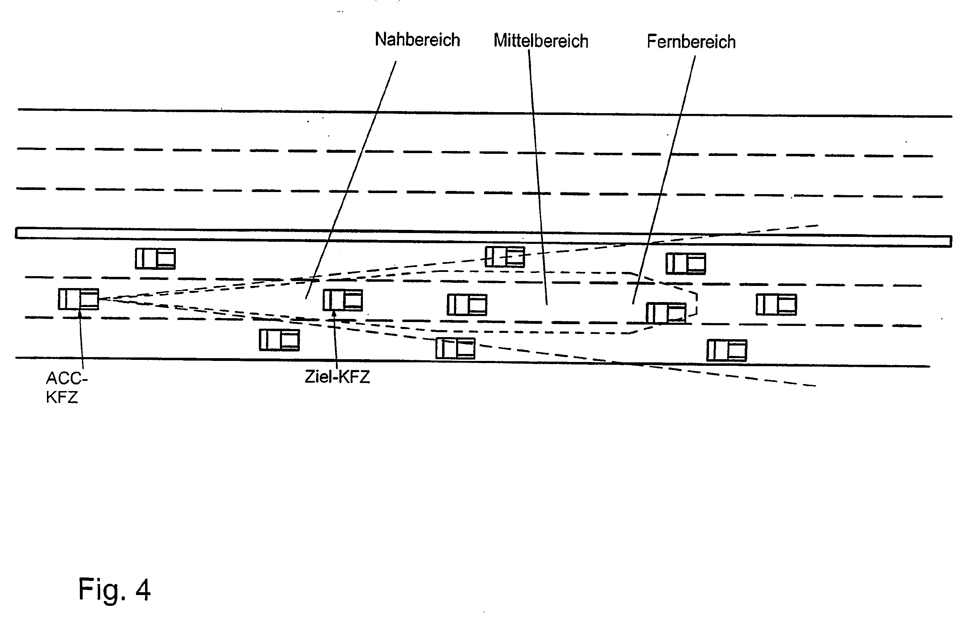

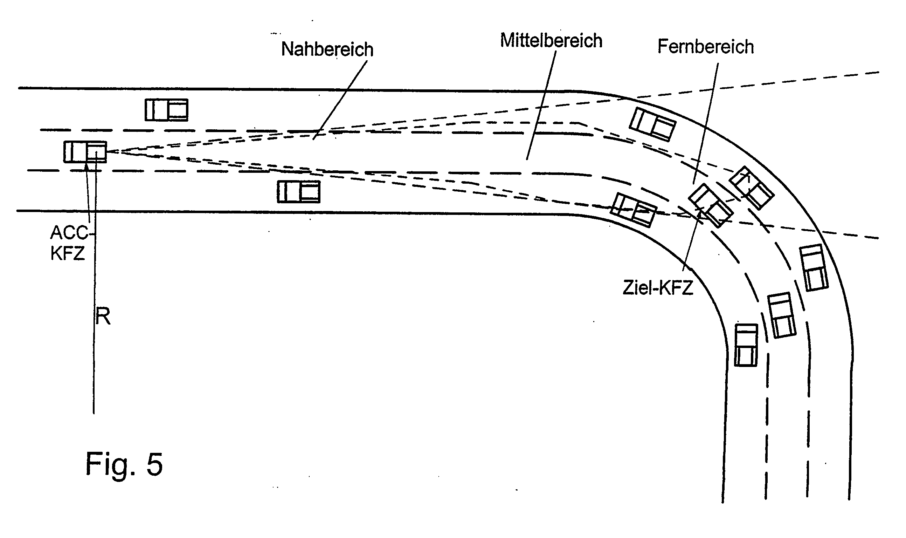

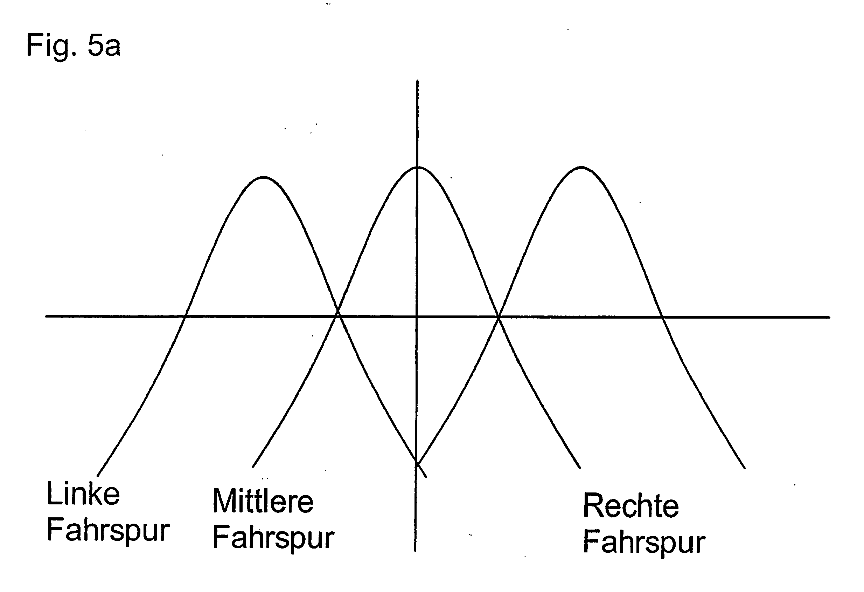

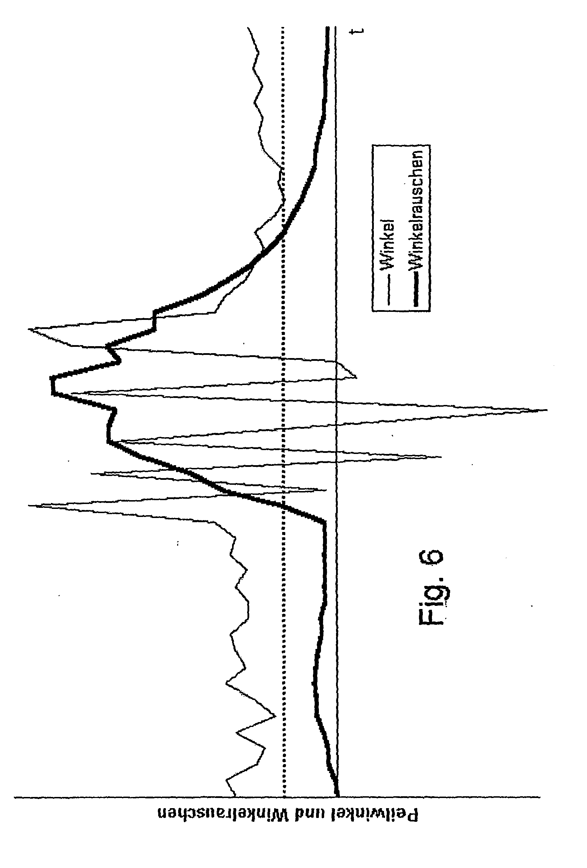

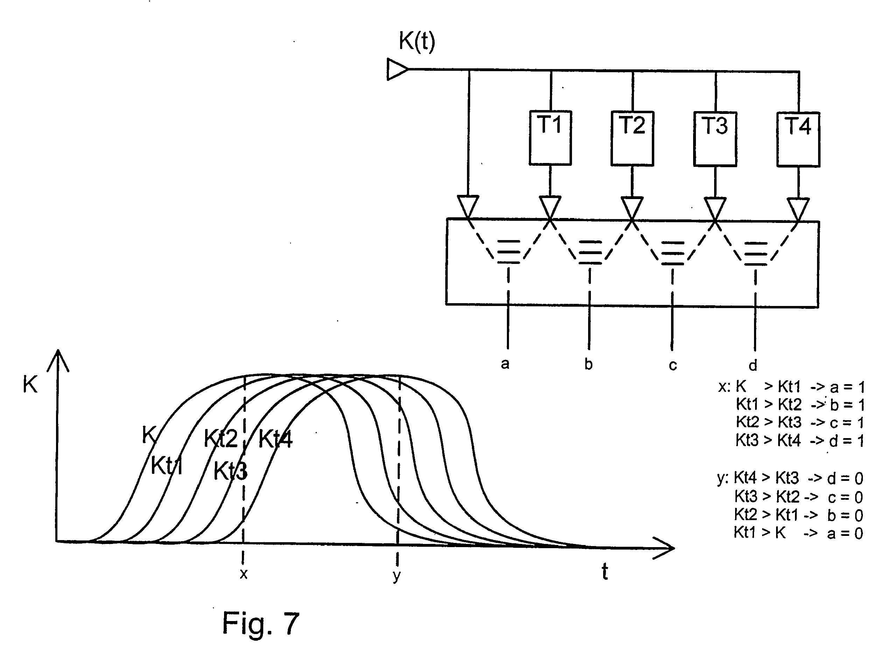

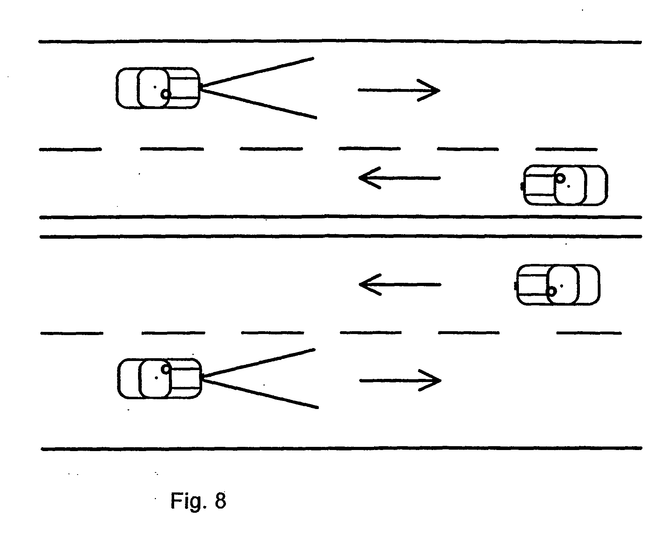

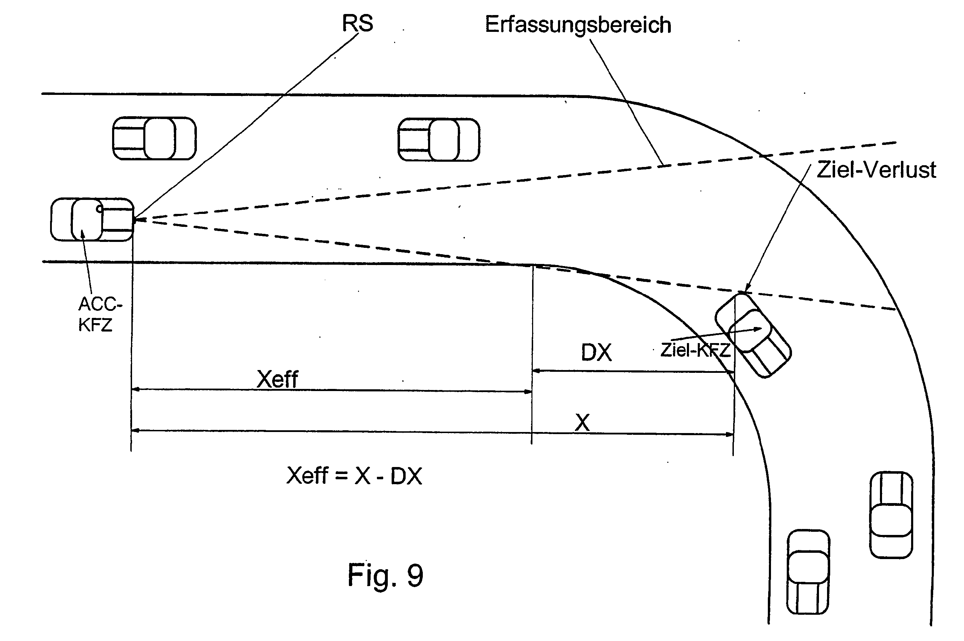

Weitere Details, Funktionen, Alternativen und Abwandlungen der Erfindung werden nachstehend anhand der Beschreibung der Zeichnung erläutert. Fig. 1 zeigt ein schematisches Blockschaltbild einer Ausführungsform eines erfindungsgemäßen Systems zur Auswertung der Fahrumgebung eines KFZes; Fig. 2 erläutert die Beziehungen der einzelnen von dem Radarsensor in dem erfindungsgemäßen System zur Auswertung der Fahrumgebung eines KFZs nach Fig. 1 erfassten physikalischen Größen; Fig. 3 veranschaulicht, wie das erfindungsgemäße System nach Fig. 1 die empfangenen Datensignale aus den unterschiedlichen Sensoren verarbeitet; Fig. 4 veranschaulicht die Situation eines KFZs mit einem erfindungsgemäßen System zur Auswertung der Fahrumgebung eines KFZs auf einem mehrspurigen geraden Fahrbahnabschnitt; Fig. 5 veranschaulicht die Situation eines KFZs mit einem erfindungsgemäßen System zur Auswertung der Fahrumgebung eines KFZs auf einem mehrspurigen gekrümmten Fahrbahnabschnitt; Fig. 5a zeigt die Wahrscheinlichkeitsverteilung, dass ein KFZ in einer linken, mittleren oder rechten Fahrspur anzutreffen ist; Fig. 6 zeigt die für jedes der Objekte berechnete Rauschamplitude des Peilwinkels; Fig. 7 zeigt ein schematisches Blockschaltbild und deren Eingangs- und Ausgangssignale für das Erkennen von Links- oder Rechtskurven in einem erfindungsgemäßen System zur Auswertung der Fahrumgebung eines KFZs; Fig. 8 zeigt die Situtation eines KFZs mit einem erfindungsgemäßen System zur Auswertung der Fahrumgebung eines KFZs bei der Erkennung ob sich das KFZ in Rechts- oder Linksverkehr bewegt; und Fig. 9 veranschaulicht das Verhalten eines KFZs mit einem erfindungsgemäßen System zur Auswertung der Fahrumgebung eines KFZs auf einem gekrümmten Fahrbahnabschnitt bei Verlust des Ziel-KFZs.

### Detaillierte Beschreibung einer bevorzugten Ausführungsform der Erfindung

Fig. 1 zeigt eine Ausführungsform eines schematischen Blockschaltbildes eines erfindungsgemäßen Systems zur Auswertung der Fahrumgebung eines KFZs und zur Beeinflussung der Geschwindigkeit des KFZes. Dieses System hat eine elektronische Steuereinheit ECU, die mit einem Signalgeber verbunden ist, der ein für die Wunschgeschwindigkeit Vsoll des KFZs charakteristisches Signal erzeugt. Weiterhin empfängt die elektronische Steuereinheit ECU von einem als Gierratensensor arbeitenden Signalgeber ein für die Drehrate dPSI/dt des KFZs um dessen Hochachse charakteristisches Signal. Außerdem ist die elektronische Steuereinheit ECU mit einem als Radarsensor RS arbeitenden Signalgeber verbunden. Der Radarssensor RS erzeugt für in dem in Fahrtrichtung des KFZs vor dem KFZ liegenden Raum befindliche Objekte hinsichtlich deren Abstand und Orientierung zu dem KFZ charakteristische Signale, die der ECU zugeführt und in dieser in einer weiter unten beschreibenen Weise weiterverarbeitet werden. Des weiteren empfängt die elektronische Steuereinheit ECU von als Rad-Drehzahlsensoren arbeitenden Signalgebern, wie sie zum Beispiel auch für den ABS-Betrieb erforderlich sind, die Geschwindigkeit der Räder VL, VR, HL, HR des KFZs charakteristische Signale v(VL), v(VR), v(HL), v(HR). Als Signalgeber für den Lenkwinkeleinschlag des KFZ-Lenkrades ist ein Drehwinkelgeber LW und als Signalgeber für die Stellung des Fahrpedals des KFZs ist ebenfalls ein Drehwinkelgeber FP mit der elektronischen Steuereinheit ECU verbunden. Die elektronische Steuereinheit ECU ist mit auf das Fahrverhalten des KFZs Einfluß nehmenden Steuergeräten in Form des Motormanagement oder der elektrischen oder elektrohydraulischen Bremsanlage verbunden, um diesen Ausgangssignale zuzuführen, welche von dem Fahrverhalten des vor dem eigenen KFZ befindlichen KFZs und ggf. der Fahrzeugumgebung abgeleitet sind. Der Radarsensor RS tastet den Raum vor dem KFZ kontinuierlich ab und erzeugt Signale, die für im vor dem KFZs liegenden Raum befindliche Objekte X hinsichtlich deren Abstand und Orientierung zu dem KFZ charakteristisch sind. Insbesondere werden die Geschwindigkeit v_rel_X des Objektes X relativ zur Geschwindigkeit v des eigenen KFZes, der Abstand d_x relativ zum eigenen KFZ, der Winkelversatz Alpha_x oder die Seitenablage relativ zur Fahrzeuglängsachse des eigenen KFZs kontinuierlich erfasst und in der elektronischen Steuereinheit ECU ausgewertet (siehe Fig. 2). Wie in Fig. 2 dargestellt, ist der mit dem Sensor abgetastete Raum vor dem KFZ etwa kegel- oder keulenförmig und hat abhängig von den tatsächlichen Umgebungs-Gegebenheiten eine Länge von etwa 200 - 250 Metern und einen Öffnungswinkel von etwa 12°. Zur Steigerung der Auswertesicherheit werden jedoch nur in einem Kernbereich von etwa 8 - 10° sich befindende Objekte betrachtet. Eine sichere Erfassung kann damit für Objekte erfolgen, die sich maximal im Abstand von etwa 200 +/-30 Metern vom eigenen KFZ entfernt befinden bzw. vor diesem sich innerhalb oder unterhalb dieses Bereiches fortbewegen. Diese im wesentlichen rechteckige Fahrspur wird in der elektronischen Steuereinheit ECU als Datenstruktur nachgebildet und in einen Nahbereich (zum Beispiel etwa 0 - 50 Meter), einen Fembereich (zum Beispiel 150+ Meter), und einen Mittelbereich (zum Beispiel 50 - 150 Meter) unterteilt. Dabei können die Datensignale von speziellen für das erfindungsgemäße System im KFZ vorgesehenen Sensoren stammen oder von Sensoren, die auch für andere KFZ-Systeme (Bremssteuerung, "Elektronisches Lenkrad", EPS, oder dergl.) vorgesehen sind und in ein im KFZ vorgesehenes Bussystem (zum Beispiel CAN-BUS) ihre Daten einspeisen. In Fig. 3 ist veranschaulicht, wie die elektronische Steuereinheit ECU die empfangenen Datensignale aus den unterschiedlichen Sensoren verarbeitet und Daten erzeugt, die in Tabellen oder Beschreibungsobjekten abgelegt und ggf. laufend aktualisiert werden. Ein wesentlicher Teil des erfindungsgemäßen Systems besteht aus einer Objekttabelle OT, in der die im Raum vor dem KFZ befindlichen (beweglichen und ggf. auch statischen) Objekte mit ihren Attributen (zum Beispiel Geschwindigkeit relativ zur Geschwindigkeit des eigenen KFZes, der Abstand relativ zum eigenen KFZ, der Winkelversatz oder die Seitenablage relativ zur Fahrzeuglängsachse des eigenen KFZes, wie lange befindet sich ein bestimmtes Objekt bereits in der Objekttabelle OT, wie oft hat es einen Spurwechsel vorgenommen, etc.), also deren Objektbeschreibungen geführt werden. Aus der Objekttabelle OT und deren Historie HIST, also aus in der Vergangenheit liegenden Objektbeschreibungen wird eine Fahrzeug-Umgebungsbeschreibung FUB (bewegt sich das KFZ in Links- oder Rechtsverkehr, fährt es auf einer Autobahn, einer Landstraße oder im Stadtverkehr, wie viele Fahrspuren hat die derzeit von dem KFZ befahrene Straße, auf welcher Fahrspur befindet sich das KFZ derzeit, ist die derzeit von dem KFZ befahrene Straße kurvig, wenn ja in welchem Maß, oder verläuft die Straße geradlinig, etc.) erzeugt, aus der zusammen mit der Historie HIST der Objekttabelle OT und den aktuellen Daten in der Objektauswahl OA ein Objekt aus der Objekttabelle OT als Ziel-KFZ ausgewählt wird, das als "vorausfahrendes KFZ" herangezogen wird, um an dessen Fahrverhalten das eigene Fahrverhalten (Geschwindigkeit vsoll, Abstand dsoll etc.) anzupassen, wie dies in Fig. 4 gezeigt ist. Zur Festlegung der Mittellinie der eigenen Fahrspur im vor dem KFZ erfassten Raum wird der Krümmungsradius R der Bahnkurve des Schwerpunktes des eigenen KFZs anhand der Änderung der Winkelpeilung der voranfahrenden Objekte und der absoluten Lage der voranfahrenden Objekte gegenüber der momentan prädizierten Fahrspur in der elektronischen Steuereinheit ECU modifiziert. Das heißt, dass in der elektronischen Steuereinheit ECU für das eigene KFZ die Distanz gegenüber dem momentanen Ort auf der Fahrspur ermittelt wird, nach deren Zurücklegen sich der Krümmungsradius R der Bahnkurve des Schwerpunktes des eigenen KFZs ändert. Das Mass der Änderung wird dabei aus der Änderung der Winkelpeilung der voranfahrenden Objekte bzw. deren absoluter Lage gegenüber der momentan prädizierten Fahrspur bestimmt. Mit anderen Worten findet ein "vorausschauendes Fahren" statt, bei dem das eigene KFZ darauf vorbereitet werden kann, wann bzw. in welchem Abstand zur momentanen Position eine Verringerung der eigenen Geschwindigkeit angezeigt ist, da sich - auch - die vorausfahrenden KFZe in eine Kurvensituation begeben. Um hierbei eine möglichst genaue Vorhersage zu treffen, wie sich der Krümmungsradius R der Bahnkurve des Schwerpunktes des eigenen KFZs verändert, werden die Lateralgeschwindigkeiten der sich im vor dem KFZ erfassten Raum bewegenden Objekte in der elektronischen Steuereinheit ECU ausgewertet und in der Objekttabelle OT als Attribut abgelegt und aktualisiert. Gleichermaßen wird mit der Aufenthaltsdauer der sich im vor dem KFZ erfassten Raum bewegenden Objekte sowie deren Geschwindigkeit und Abstand in Fahrtrichtung des eigenen KFZs verfahren, um den Krümmungsradius R in Abhängigkeit von deren Aufenthaltsdauer bzw. Geschwindigkeit und/oder Abstand vom eigenen KFZ zu modifizieren. In der Fahrzeugumgebungsbeschreibung FUB (Fig. 3) wird außerdem der Verlauf und die Breite der Fahrspur des eigenen KFZs im vor diesem liegenden Raum als Beschreibung abgelegt und aktualisiert. Wie in Fig. 4 und 5 veranschaulicht, wird in der Fahrzeugumgebungsbeschreibung FUB die Breite der eigenen Fahrspur abhängig vom Abstand zum eigenen KFZ in der elektronischen Steuereinheit ECU modifiziert, wobei die maximale Breite im Nahbereich und im Fembereich geringer als im Mittelbereich ist. Dabei wird die Breite der eigenen Fahrspur nur an solchen Stellen im Raum vor dem eigenen KFZ in der elektronischen Steuereinheit ECU festgelegt, an denen sich im erfassten Raum vor dem eigenen KFZ auch Objekte befinden. Wie in Fig. 4, 5 ebenfalls veranschaulicht, wird in der Fahrzeugumgebungsbeschreibung (Fig. 2) die Breite der eigenen Fahrspur in Abhängigkeit von der Entfernung erfasster Objekte im Raum vor dem eigenen KFZ und der Orientierung einer Kurve in der elektronischen Steuereinheit ECU so modifiziert, daß in großer Entfernung die Breite auf der Kurvenaußenseite abnimmt und die Breite in mittlerer Entfernung auf der Kurveninnenseite zunimmt. Außerdem kann die Breite der eigenen Fahrspur in der elektronischen Steuereinheit ECU nach beiden Seiten an der Stelle verbreitert werden, an der sich ein Ziel-KFZ befindet, von dessen Fahrverhalten das Fahrverhalten des eigenen KFZs abhängig sein soll. Weiterhin wird in der Fahrzeugumgebungsbeschreibung FUB die eigene Fahrspur durch die elektronische Steuereinheit ECU in Abhängigkeit von der Dauer, mit der das Fahrverhalten des eigenen KFZs vom Fahrverhalten dieses Ziel-KFZs abhängig ist, nach beiden Seiten an der Stelle verbreitert, an der sich das Ziel-KFZ befindet (Siehe Fig. 5). In entsprechender Weise wird die Breite der eigenen Fahrspur in der elektronischen Steuereinheit (ECU) in Abhängigkeit von der Geschwindigkeit des eigenen KFZs und/oder von der Kurvigkeit der Straße modifiziert, auf der sich das eigene KFZ befindet. Für die Bestimmung der Kurvigkeit wird weiter unten eine Vorgehensweise gemäß der Erfindung erläutert. Ein weiteres Merkmal, das bei der Auswahl eines Objektes als Ziel-KFZ eine Rolle spielt, ist dessen Fahrspur. Dazu werden die im Raum vor dem eigenen KFZ befindlichen Objekte hinsichtlich ihrer momentanen Position im Vergleich zur Fahrspurbreite im entsprechenden Abstand zum eigenen KFZ klassifiziert. Vor dem eigenen KFZ erfasste, sich bewegende Objekte werden in der elektronischen Steuereinheit ECU als Objekte in der eigenen Fahrspur klassifiziert, wenn ein weiter als eine Mindestentfernung entferntes Objekt während eines vorbestimmten Zeitrahmens eine Auftrittsdauer in der eigenen Fahrspur hat, die zur Summe der Auftrittsdauer in einer oder beiden Nachbarspuren ein Verhältnis hat, das einen Schwellenwert überschreitet. In diesem Fall wird dieses Objekt mit den entsprechenden Attributen in der Objekttabelle OT abgelegt. Die Klassifizierung eines KFZs als zum Beispiel zur mittleren Fahrspur gehörig - in der sich auch das eigene KFZ befindet - setzt dabei voraus, dass es sich innerhalb des für den momentanen Abstand des KFZs Korridors mit der entsprechenden Breite befindet. Fährt es links außerhalb des Korridors der die eigene Fahrspur begrenzt, wird es als in der linken Spur fahrend klassifiziert; fährt es rechts außerhalb des Korridors der die eigene Fahrspur begrenzt, wird es als in der rechten Spur fahrend klassifiziert (siehe zum Beispiel Fig. 5). In der Fig. 5a ist veranschaulicht, mit welcher Wahrscheinlichkeitsverteilung ein KFZ in einer linken, mittleren oder rechten Fahrspur anzutreffen ist. Ein ensprechender Wert wir in der Objekttabelle OT abgelegt und für jedes der Objekte aktualisiert. Der vorbestimmte Zeitrahmen kann dabei in Abhängigkeit von der Geschwindigkeit des eigenen KFZs in der elektronischen Steuereinheit ECU modifiziert und in der Objekttabelle OT abgelegt werden. Außerdem kann der Schwellenwert mit geringer werdender Entfernung des Objektes von dem eigenen KFZ in der elektronischen Steuereinheit ECU verringert werden. Weiterhin wird die Aufenthaltsdauer aller Objekte für die vorhandenen Fahrspuren in Bezug auf die eigene Fahrspur ermittelt und über die Zeit gewichtet. Dies wird als Attribut in der Objekttabelle OT abgelegt. Zeitlich neuere Auftritte von Objekten in der Fahrspur des eigenen KFZs werden höher bewertet als zurückliegende Aufritte, und räumlich entfernt liegende Auftritte von Objekten in der Fahrspur des eigenen KFZs werden geringer bewertet als räumlich näher liegende Auftritte. Aus den vorhandenen Fahrspuren werden jeweils maximal zwei sich bewegende Objekte als Prioritäts-Objekte in der Objekttabelle OT durch die elektronische Steuereinheit ECU ausgewählt und mit einer ensprechenden Kennzeichnung als Attribut in der Objekttabelle OT versehen, wenn sie während eines über einem Mindestwert liegenden Zeitraums als sich vor dem eigenen KFZ bewegend erfasst wurden. Diese jeweilige Dauer wird für sehr nahe zum eigenen KFZ (0 - 30 m) befindliche Objekte und sehr fern zum eigenen KFZ (120 - 200m) befindliche Objekte geringer gewichtet und dazwischen liegende Objekte stärker gewichtet. Für jedes derart gekennzeichnete Prioritäts-Objekt in der Objekttabelle OT wird durch die elektronische Steuereinheit ECU ermittelt, wie weit jedes Prioritäts-Objekt seine seitliche Lage relativ zur Mittellinie der Fahrspur des eigenen KFZs verändert. Als Änderungswert der Fahrspur des eigenen KFZs im jeweiligen Abstand zum eigenen KFZ wird durch die elektronische Steuereinheit ECU die Summe der Mittelwerte der seitlichen Lageändererungen der Prioritäts-Objekte ermittelt und ebenfalls in der Objekttabelle OT abgelegt. Durch die Objektauswahl OA (Fig. 4) wird in der elektronischen Steuereinheit ECU aus den Prioritäts-Objekten dasjenige als Ziel-KFZ auswählt, von dessen Fahrverhalten das Fahrverhalten des eigenen KFZs abhängig sein soll, welches sich in der Fahrspur des eigenen KFZs bewegt, eine Bewegungsrichtung über Grund hat, die im wesentlichen mit der Bewegungsrichtung des eigenen KFZs übereinstimmt; und während einer vorbestimmten Zeitdauer, welche aus der Objekttabelle OT und deren Historie HIST ausgelesen wird, im Raum vor dem eigenen KFZ erfasst wurde. Dabei wird in der Objekttabelle OT für jedes der Prioritäts-Objekte auch die Quergeschwindigkeit relativ zur Mittellinie der eigenen Fahrspur als Attribut mitgeführt und aktualisiert. Dies erlaubt die Auswahl des Ziel-KFZs auch nach dem Kriterium, dass diese Quergeschwindigkeit einen ggf. auch in Abhängigkeit vom Abstand des jeweiligen Objektes zum eigenen KFZ veränderbaren Schwellenwert nicht überschreitet. Weiterhin wird, wie in Fig. 6 gezeigt, als ein Attribut in der Objekttabelle OT für jedes der als Prioritäts-Objekte ausgewählten Objekte die Rauschamplitude des Peilwinkels gegenüber der Mittellängsachse des eigenen KFZs aufgezeichnet und ggf. in der Historie HIST mitgeführt. Damit ist es möglich, zu jedem der Prioritäts-Objekte in der elektronischen Steuereinheit ECU den zeitlichen Verlauf der Rauschamplitude des Peilwinkels auszuwerten. Erfindungsgemäß wird dazu das Rauschsignal Tiefpass-gefiltert um kurze Winkelausschläge auszublenden. Bei Überschreiten eines entfernungsabhängigen Schwellenwertes wird dieses Prioritäts-Objekt von der Auswahl als Ziel-KFZ, von dessen Fahrverhalten das Fahrverhalten des eigenen KFZs abhängig sein soll, ausgeschlossen. Gleichermaßen wird ein Prioritäts-Objekt von der Auswahl als Ziel-KFZ, von dessen Fahrverhalten das Fahrverhalten des eigenen KFZs abhängig sein soll, ausgeschlossen, wenn dessen Abstand zum eigenen KFZ größer ist als ein Entfernungs-Schwellenwert, der Absolutwert des Peilwinkels zu diesem Prioritäts-Objekt größer ist als ein Winkel-Schwellenwert (zum Beispiel 4°), und dieses Prioritäts-Objekt bisher nicht als Ziel-KFZ ausgewählt war. Auch hierzu ist die kontinuierliche Aufzeichnung der Rauschamplitude des Peilwinkels gegenüber der Mittellängsachse des eigenen KFZs als Attribut in der Objekttabelle OT für jedes der als Prioritäts-Objekte ausgewählten Objekte und ggf. deren Mitführen in der Historie HIST sehr nützlich. In der elektronischen Steuereinheit ECU wird ein Spurwechsel des eigenen KFZs daran erkannt, dass die Änderung des Peilwinkels zum Ziel-KFZ, von dessen Fahrverhalten das Fahrverhalten des eigenen KFZs abhängig sein soll, einen bestimmten Schwellenwert überschreitet und im wesentlichen gleich der Drehrate des eigenen KFZs mit inversem Vorzeichen ist. Die Drehrate des eigenen KFZs ist aus dem Signal des Gierratensensors (siehe Fig.1) ableitbar, der ein für die Drehrate dPSI/dt des KFZs um dessen Hochachse charakteristisches Signal liefert. Auch für diese Auswertung ist die kontinuierliche Aufzeichnung des Peilwinkels des Ziel-KFZs gegenüber der Mittellängsachse des eigenen KFZs und dessen Rauschamplitude als Attribut in der Objekttabelle OT und deren Mitführen in der Historie HIST erforderlich. Wie in Fig. 7 gezeigt, wird in der elektronischen Steuereinheit ECU eine mit der Krümmung der Fahrspur des eigenen KFZs in Beziehung stehende Größe K(t) als Eingangssignal parallel mehreren TP-Filtern T1, T2, T3, T4 1. Ordnung mit unterschiedlichen Zeitkonstanten zugeführt. Diese Größe kann zum Beispiel der in der oben beschriebenen Weise ermittelte Kurvenradius bzw. dessen Kehrwert oder die Drehrate des Fahrzeugs sein. Die Ausgangssignale der TP-Filter und das Eingangssignal werden jeweils miteinander verglichen um im Straßenverlauf des eigenen KFZs ein Übergang von einer Kurve einer Orientierung zu einer Kurve entgegengesetzter Orientierung zu erkennen. Dies geschieht in der elektronischen Steuereinheit ECU in der Weise, dass wenn die Ausgangssignale einen jeweiligen Mindestabstand zu einander haben und das Ausgangssignal eines jeweiligen TP-Filters geringer ist als das Ausgangssignal eines TP-Filters mit einer geringeren Zeitkonstante und größer ist als Ausgangssignal eines TP-Filters mit einer größeren Zeitkonstante, oder das Ausgangssignal eines jeweiligen TP-Filters größer ist als das Ausgangssignal eines TP-Filters mit einer geringeren Zeitkonstante und geringer ist als Ausgangssignal eines TP-Filters mit einer größeren Zeitkonstante, ein Übergang erkannt wird. In Fig. 7 ist dies in der Weise veranschaulicht, dass zu zwei Zeitpunkten X, Y die im Beispiel verwendeten vier Vergleiche durchgeführt werden. Wenn die einzelnen Ergebnisse (Ausgangssignale a, b, c, d) der vier Vergleiche von 1, 1, 1, 1 nacheinander auf 0, 0, 0, 0 wechseln, ist daraus abzuleiten, dass ein Kurvenübergang stattgefunden hat. Ein weiterer Aspekt des erfindungsgemäßen Systems besteht darin, festzustellen in welcher Umgebung sich das eigene KFZ derzeit befindet. Dazu wird in der elektronischen Steuereinheit ECU ein Wert "Umgebungs-Geschwindigkeit" in der Fahrzeugumgebungsbeschreibung FUB (siehe Fig. 2) geführt und regelmäßig aktualisiert. Zur Unterscheidung der Art der Straße, auf der das eigene KFZ fährt, werden für drei unterschiedliche Straßen-Umgebungen (Stadtverkehr, Landstraße, Autobahn) in der elektronischen Steuereinheit ECU Kennwerte mit fließenden Grenzen ermittelt. Dieser Wert wird von einem momentanen Betrag an die tatsächlich gefahrene Geschwindigkeit des eigenen KFZs in Stufen angenähert. Die tatsächlich gefahrene Geschwindigkeit des eigenen KFZs wird dabei von dem Fahrpedalsignal FP (siehe Fig.1) bzw. einem (nicht weiter veranschaulichten) Tachometersignal abgeleitet. Erfindungsgemäß erfolgt eine Annäherung von einem höheren Wert als dem momentanen Betrag der tatsächlich gefahrenen Geschwindigkeit mit einer ersten Geschwindigkeitsrate und eine Annäherung von einem niedrigeren Wert als dem momentanen Betrag der tatsächlich gefahrenen Geschwindigkeit mit einer zweiten, erheblich höheren als der ersten Geschwindigkeitsrate. Außerdem wird der Wert "Umgebungs-Geschwindigkeit" von einem momentanen Betrag an einen Wert, der im Bereich Autobahn (zum Beispiel 150 kmh) liegt, in Stufen angenähert, wenn sich vor dem eigenen KFZ wenigstens zwei im wesentlichen nebeneinander her fahrende andere Objekte befinden. Weiterhin wird der Wert "Umgebungs-Geschwindigkeit" von einem momentanen Betrag an einen unteren Grenzwert in Stufen angenähert.

Wenn sich aus dem Wert "Umgebungs-Geschwindigkeit" und der momentanen Drehrate des eigenen KFZs eine Querbeschleunigung ergäbe, die einen Schwellenwert übersteigt, wird der Wert "Umgebungs-Geschwindigkeit" mit einer vierten, erheblich höheren als der dritten Geschwindigkeitsrate solange reduziert, bis diese Querbeschleunigung den Schwellenwert nicht mehr übersteigt. Schließlich ist der Wert "Umgebungs-Geschwindigkeit" auf ein vorbestimmbares Vielfaches (zum Beispiel 0.5 - 1.5) der Wunschgeschwindigkeit des eigenen KFZs sowie auf einen vorbestimmbaren unteren Schwellenwert (zum Beispiel 40 kmh) und einen vorbestimmbaren oberen Schwellenwert (zum Beispiel 160 kmh) begrenzt. Der Wert "Umgebungs-Geschwindigkeit" ist in mehrerlei Hinsicht für die Funktionsweise des erfindungsgemäßen Systems wichtig, da er auf andere Parameter Einfluß hat bzw. zu deren Bestimmung, Modifizierung bzw. Aktualisierung herangezogen wird. Andererseits haben auch weitere, aus dem Fahrverhalten des eigenen oder fremder KFZe abgeleitete Größen, die einen Rückschluß auf die Umgebung zulassen, einen Einfluß auf diese Parameter. Eine dieser abgeleiteten Größen ist der Krümmungsverlauf der Straße, auf der sich das eigene KFZ derzeit befindet; mathematisch ausgedrückt ist das der Verlauf des Kehrwertes des Kurvenradius über dem Weg. Erfindungsgemäß wird dieser Krümmungsverlauf nach dem Weg differenziert. In Abhängigkeit von dem Ergebnis wird ein Kennwert "Kurvigkeit" ermittelt. Abhängig vom Ergebnis der Differentiation des Krümmungsverlaufes nach dem Weg wird bei einer Abfolge von Kurven-Wechseln über eine bestimmte Wegstrecke die "Kurvigkeit" mit einer vorbestimmten, von der Geschwindigkeit des eigenen KFZs und/oder von dem Abstand zum Ziel-KFZ abhängigen Rate verändert. In der elektronischen Steuereinheit ECU wird außerdem der Krümmungsverlauf nach dem Weg differenziert und bei langen geraden Abschnitten über einer bestimmten Wegstrecke in Abhängigkeit von dem Ergebnis der Wert "Kurvigkeit" mit einer vorbestimmten, vorzugsweise von der Geschwindigkeit des eigenen KFZs und/oder von dem Abstand zum Ziel-KFZ und/oder der Länge des geraden Abschnittes abhängigen Rate verringert. Gleichermaßen wird, wenn das Durchfahren einer S-Kurve erkannt wird, also zwei gegenläufige Kurvenabschnitte ohne ein oder nur mit einem relativ kurzen geraden Zwischenstück, in Abhängigkeit von dem Ergebnis der Wert "Kurvigkeit" mit hoher Rate erhöht. Ein weiterer, den Wert "Kurvigkeit" beeinflussender Faktor ist das Integral des Drehratensignals dPSI/dt des KFZs um dessen Hochachse, das die Richtungsänderung des eigenen Fahrzeugs über den Weg wiedergibt. In Abhängigkeit von diesem wird der Wert "Kurvigkeit" mit einer hohen Rate um einen dynamischen Anteil erhöht. Bei Wegfallens des über einem vorbestimmten Wert liegenden Drehratensignals wird der dynamische Anteil wieder - auf den vorherigen Wert - zurückgeführt. Das erfindungsgemäße System sieht dabei vor, den dynamischen Anteil bei Rechtsverkehr nur für Rechtskurven und bei Linksverkehr nur für Linkskurven zu dem Wert "Kurvigkeit" zu addieren bzw. wieder abzuziehen. Die Art und Weise, wie Rechtsverkehr oder Linksverkehr erkannt wird, ist weiter unten beschrieben. Der dynamische Anteil wird außerdem abhängig von der Geschwindigkeit des eigenen KFZs modifiziert. In Abhängigkeit von der so ermittelten "Kurvigkeit" kann die Geometrie des Fahrkorridors zur Auswahl des für die Regelung relevanten Ziels dahingehend angepasst (z.B. verkürzt) werden, dass eine fehlerhafte Zielauswahl in Kurvenübergängen vermieden wird. Gleichermaßen werden bei der Auswahl als Ziel-KFZ solche bevorzugt, die relativ wenig "hin- und herdriften". Ein weiteres Kriterium bei der Auswahl eines Prioritäts-Objektes besteht darin, dass ein Objekt, welches sich im Erfassungsraum vor dem eigenen KFZ befindet, einen vorbestimmten Abstand unterschreitet und sich nicht in der Fahrspur des eigenen KFZs befindet, von der Auswahl als Prioritäts-Objekt ausgeschlossen wird. Auch ein Objekt, das zur Mittel-Längsachse des eigenen KFZs sich ausserhalb eines vorbestimmten Winkels befindet oder einen vorbestimmten Winkel überschreitet, wird von der Auswahl als Prioritäts-Objekt ausgeschlossen. Zur Erkennung von Links- oder Rechtsverkehr wird für vor dem eigenen KFZ in den vorhandenen Fahrspuren herfahrende KFZe in der elektronischen Steuereinheit ECU deren Geschwindigkeit ermittelt und hieraus ein Kennwert abgeleitet, der angibt, ob das eigene KFZ sich in Links- oder in Rechtsverkehr befindet. Dies ist in Fig. 8 veranschaulicht, wobei in Fig. 8 oben eine Linksverkehrssituation (wie z.B. in Großbritannien oder Japan) und in Fig. 8 unten eine Rechtsverkehrssituation (wie zum Beispiel in Kontinental-Europa oder in den USA) gezeigt ist. Um zu erkennen wo sich das eigene KFZ befindet, wird die von einer vorbestimmten Anzahl der vor dem eigenen KFZ in den vorhandenen Fahrspuren herfahrenden KFZe zurückgelegte Strecke oder eine damit korrelierte Größe ermittelt und zu der entsprechenden Größe für das eigene KFZ in Beziehung gesetzt. Dazu wird der Kennwert als Integral der Differenzgeschwindigkeiten der KFZe einer ersten, vorzugsweise der linken Fahrspur, und der Differenzgeschwindiglkeiten der KFZe einer zweiten, vorzugsweise der rechten Fahrspur, in Bezug auf die Geschwindigkeit des eigenen Fahrzeugs bestimmt. Zur Erhöhung der Erkennungssicherheit wird ein oberer Schwellenwert und ein unterer Schwellenwert bestimmt, wobei die elektronische Steuereinheit ECU ein Signal "Rechtsverkehr" erzeugt und in der Fahrzeugumgebungsbeschreibung FUB abspeichert, wenn der Kennwert den oberen Schwellenwert überschreitet, und ein Signal "Linksverkehr" erzeugt und in der Fahrzeugumgebungsbeschreibung FUB abspeichert, wenn der Kennwert den unteren Schwellenwert unterschreitet. Dabei werden zur Erkennung von Links- oder Rechtsverkehr nur Geschwindigkeiten von KFZen berücksichtigt, die einen vorbestimmten Schwellenwert (zum Beispiel 10 km/h) überschreiten. Außerdem werden zur Erkennung von Links- oder Rechtsverkehr nur dann vor dem eigenen KFZ herfahrende KFZe ausgewertet, wenn der Radius der Fahrspur einen vorbestimmten Schwellenwert (zum Beispiel 25 - 50 m) überschreitet. Bei der Auswertung zur Erkennung von Links- oder Rechtsverkehr werden Kennwerte von KFZen mit zur Geschwindigkeit des eigenen KFZs negativer Relativgeschwindigkeit, deren Betrag größer ist als die Geschwindigkeit des eigenen KFZs mit einem Gewichtungsfaktor versehen. Über den Gewichtungsfaktor wird festgelegt in welchem Maße Gegenverkehr berücksichtigt wird, wobei für die als Gegenverkehr erkannten Fahrzeuge die Relativgeschwindigkeit negiert betrachtet wird. Eine weitere Funktionalität des erfindungsgemäßen System ist mit Bezug auf Fig. 9 nachstehend erläutert. Wenn ein Ziel-KFZ den Erfassungsraum vor dem eigenen KFZ verlässt, wird in der elektronischen Steuereinheit ECU ein Ansteuersignal erzeugt, das die momentane Geschwindigkeit oder die momentane Beschleunigung des eigenen KFZs wenigstens für eine Strecke auf einen Wert begrenzt, die maximal dem Abstand X zwischen dem eigenen KFZ und dem Ziel-KFZ zum Zeitpunkt dessen Verlassens des Erfassungsraums im wesentlichen entspricht. Dazu wird kontinuierlich der Abstand X zwischen dem eigenen KFZ und dem Ziel-KFZ erfasst. Sofern das Ziel-KFZ den Erfassungsraum des Radarsensors RS des eigenen KFZs verläßt wird zum Zeitpunkt des Verlassens des Erfassungsraums um eine Verkürzungsstrecke DX auf einen effektiven Abstand Xeff verringert. Diese Verkürzungsstrecke DX ist von der Umgebung (Autobahn, Landstraße, Stadtverkehr), der Geschwindigkeit des Ziel-KFZs zum Zeitpunkt des Verlassens des Erfassungsraums, der momentanen Geschwindigkeit des eigenen KFZs, den Kurvenradien von innerhalb eines vorbestimmten Zeitraums in der Vergangenheit bereits durchfahrener Kurven, oder dergl. abhängig. Da das Ziel-KFZ vor dem eigenen KFZ "verschwindet", wenn es in eine Kurve fährt während das eigene KFZ noch geradeaus fährt, hätte dies für das eigene KFZ zur Folge, dass das ACC-System die Geschwindigkeit erhöht. Damit wäre für die Einfahrt in die Kurve die Geschwindigkeit ggf. zu hoch, so dass der Fahrer stark abbremsen müsste. Diesen Effekt unterbindet die erfindungsgemäße Funktionalität, indem ein Ansteuersignal erzeugt wird, das dieses Ansteigen der Geschwindigkeit für eine vorbestimmte Zeitdauer unterbindet. Das Ansteuersignal ist dabei für eine maximale Zeitdauer charakteristisch - und wird dementsprechend lang ausgegeben -, die sich aus der momentanen Geschwindigkeit des eigenen KFZs und dem Abstand X zwischen dem eigenen KFZ und dem Ziel-KFZ zum Zeitpunkt dessen Verlassens des Erfassungsraum oder dem effektiven Abstand Xeff ergibt.

## Patentansprüche

1. System zur Auswertung der Fahrumgebung eines KFZs und zur Beeinflussung der Geschwindigkeit des KFZs in seiner eigenen Fahrspur, mit
- einer elektronischen Steuereinheit (ECU), die mit
-- einem ein für die Wunschgeschwindigkeit des KFZs charakteristisches Signal erzeugenden Signalgeber,
-- einem ein für die Drehrate des KFZs um dessen Hochachse charakteristisches Signal erzeugenden Signalgeber,
-- einem Signalgeber, der für in dem in Fahrtrichtung des KFZs vor dem KFZ liegenden Raum befindliche Objekte hinsichtlich deren Abstand und Orientierung zu dem KFZ charakteristisches Signal erzeugt, das
--- die Geschwindigkeit relativ zur Geschwindigkeit des eigenen KFZes, und/oder
--- den Abstand relativ zum eigenen KFZ, und/oder
--- den Winkelversatz oder die Seitenablage relativ zur Fahrzeuglängsachse des eigenen KFZes, ist und
-- einem ein für die Geschwindigkeit wenigstens eines Rades des KFZs charakteristisches Signal erzeugenden Signalgeber,
verbunden ist, und die
- mit wenigstens einem auf das Fahrverhalten des KFZs Einfluß nehmenden Steuergerät verbunden ist, um diesem Ausgangssignale zuzuführen, welche von dem Fahrverhalten des vor dem eigenen KFZ befindlichen KFZs abgeleitet sind, **dadurch gekennzeichnet, daß** in der elektronischen Steuereinheit (ECU) eine Zielliste vorgehalten wird, in der für jedes Objekt ein Wert vorgehalten und regelmäßig aktualisiert wird, der die Rauschamplitude des Peilwinkels zu jedem der Objekte wiedergibt, die sich im Raum vor dem eigenen KFZ befinden.

2. System nach dem vorhergehenden Anspruch, bei dem in der elektronischen Steuereinheit (ECU) die Rauschamplitude des Peilwinkels zu jedem der Prioritäts-Objekte in der elektronischen Steuereinheit (ECU) Tiefpass-gefiltert wird und bei Überschreiten eines entfernungsabhängigen Schwellenwertes, dieses Prioritäts-Objekt von der Auswahl als Ziel-KFZ, von dessen Fahrverhalten das Fahrverhalten des eigenen KFZs abhängig sein soll, ausgeschlossen wird.

3. System nach einem der vorhergehenden Ansprüche, bei dem die elektronische Steuereinheit (ECU) ein Prioritäts-Objekt von der Auswahl als Ziel-KFZ, von dessen Fahrverhalten das Fahrverhalten des eigenen KFZs abhängig sein soll, ausschließt, wenn
- der Absolutwert des Peilwinkels zu diesem Prioritäts-Objekt größer ist als ein Winkel-Schwellenwert, insbesondere, 4; und
- dieses Prioritäts-Objekt bisher nicht als Ziel-KFZ ausgewählt war.

4. System nach einem der vorhergehenden Ansprüche, bei dem die elektronische Steuereinheit (ECU) einen Spurwechsel des eigenen KFZs erkennt, wenn die Änderung des Peilwinkels zum Ziel-KFZ, von dessen Fahrverhalten das Fahrverhalten des eigenen KFZs abhängig sein soll über einem bestimmten Schwellenwert und im wesentlichen gleich der Drehrate des eigenen KFZs mit inversem Vorzeichen ist.

## Claims

1. System for evaluating the traffic environment of a motor vehicle and for influencing the speed of the motor vehicle in its own traffic lane, comprising
- an electronic control unit (ECU), which is connected to
-- a signal transmitter that produces a signal characteristic of the desired speed of the motor vehicle,
-- a signal transmitter that produces a signal characteristic of the yaw of the motor vehicle about its vertical axis,
-- a signal transmitter that produces a signal characteristic of the articles situated, in the direction of travel of the motor vehicle, in front of the motor vehicle in terms of their spacing and orientation relative to the motor vehicle and which is
--- the speed relative to the speed of the system motor vehicle and/or
--- the spacing relative to the system motor vehicle and/or
--- the angular offset or the cross track distance relative to the vehicle longitudinal axis of the system motor vehicle, and
-- a signal transmitter that produces a signal characteristic of the speed of at least one wheel of the motor vehicle,
and which
- is connected to at least one control device, which influences the performance of the motor vehicle, in order to supply said device with output signals derived from the performance of the motor vehicle situated in front of the system motor vehicle, **characterized in that** in the electronic control unit (ECU) a target list is stored, in which a value is stored and regularly updated for each article, which value represents the noise amplitude of the bearing angle to each of the articles situated in the space in front of the system motor vehicle.

2. System according to the preceding claim, in which in the electronic control unit (ECU) the noise amplitude of the bearing angle to each of the priority articles in the electronic control unit (ECU) is low-pass-filtered and upon overshooting of a distance-dependent threshold value this priority article is excluded from selection as a target motor vehicle, upon the performance of which the performance of the system motor vehicle is to be dependent.

3. System according to one of the preceding claims, in which the electronic control unit (ECU) excludes a priority article from selection as a target motor vehicle, upon the performance of which the performance of the system motor vehicle is to be dependent, when
- the absolute value of the bearing angle to said priority article is greater than an angle threshold value, in particular 4°, and
- said priority article has not previously been selected as a target motor vehicle.

4. System according to one of the preceding claims, in which the electronic control unit (ECU) detects a lane change of the system motor vehicle when the change of the bearing angle to the target motor vehicle, upon the performance of which the performance of the system motor vehicle is to be dependent, is above a specific threshold value and substantially equal to the yaw of the system motor vehicle with an inverse sign.

## Revendications

1. Système servant à évaluer l'environnement de déplacement d'un véhicule automobile et à influer sur la vitesse du véhicule sur sa propre voie de roulement, comprenant
- une unité de commande électronique (ECU), qui est reliée à
-- un émetteur de signal générant un signal caractéristique de la vitesse souhaitée pour ledit véhicule,
-- un émetteur de signal générant un signal caractéristique de la vitesse de rotation du véhicule autour de son axe vertical,
-- un émetteur de signal générant un signal caractéristique de la distance et de l'orientation par rapport au véhicule d'objets se trouvant dans l'espace situé devant le véhicule, dans le sens de la marche de celui-ci, lequel signal correspond à
--- la vitesse desdits objets par rapport à la vitesse du véhicule, et/ou
--- la distance desdits objets par rapport au véhicule, et/ou
--- au décalage angulaire ou à l'écart latéral desdits objets par rapport à l'axe longitudinal du véhicule, ainsi qu'à
-- un émetteur de signal générant un signal caractéristique de la vitesse d'au moins une roue du véhicule, et qui est également reliée à
- au moins un dispositif de commande influant sur le comportement dynamique du véhicule pour livrer à celui-ci des signaux de sortie qui sont dérivés du comportement dynamique du véhicule se trouvant devant ledit véhicule, **caractérisé en ce qu'**une liste de cibles est conservée dans l'unité de commande électronique (ECU), laquelle liste contient pour chaque objet une valeur qui est actualisée régulièrement et correspond à l'amplitude de bruit de l'angle azimutal par rapport à chacun des objets se trouvant dans l'espace situé devant ledit véhicule.

2. Système selon la revendication précédente, dans le cadre duquel l'amplitude de bruit de l'angle azimutal est filtrée dans un filtre passe-bas par rapport à chacun des objets prioritaires dans l'unité de commande électronique (ECU) et la sélection d'un objet prioritaire comme véhicule cible, du comportement dynamique duquel est censé dépendre le comportement dynamique du véhicule, est exclue lorsqu'est dépassée une valeur seuil dépendante de la distance.

3. Système selon l'une des revendications précédentes, dans le cadre duquel l'unité de commande électronique (ECU) exclut la sélection d'un objet prioritaire comme véhicule cible, du comportement dynamique duquel est censé dépendre le comportement dynamique du véhicule, lorsque
- la valeur absolue de l'angle azimutal par rapport à l'objet cible est supérieur à une valeur angulaire seuil, notamment à 4°, et que
- l'objet prioritaire n'a pas été jusque-là sélectionné comme véhicule cible.

4. Système selon l'une des revendications précédentes, dans le cadre duquel l'unité de commande électronique (ECU) détecte un changement de voie du véhicule lorsque la modification de l'angle azimutal par rapport au véhicule cible, du comportement dynamique duquel est censé dépendre le comportement dynamique du véhicule, dépasse une valeur seuil déterminée et est pour l'essentiel égale à la vitesse de rotation du véhicule de signe inverse.
